# EUROPEAN PATENT APPLICATION

(11) **EP 4 607 995 A1**
(43) Date of publication of application: **27.08.2025**
(21) Application number: 24747429.9
(22) Date of filing: 23.01.2024
(51) Int. Cl.: H04W 24/02, H04W 24/10, H04W 8/24, H04W 48/08, H04W 52/02

(54) **METHOD AND DEVICE FOR SUPPORTING AUTOMATIC NEIGHBOR CELL RELATION (ANR) IN WIRELESS COMMUNICATION SYSTEM**

(30) Priority: 27.01.2023 KR 20230011036
(71) Applicant: Samsung Electronics Co., Ltd., Suwon-si, Gyeonggi-do 16677 (KR)
(72) Inventor: JUNG, Sangyeob, Suwon-si Gyeonggi-do 16677 (KR); AGIWAL, Anil, Suwon-si Gyeonggi-do 16677 (KR); HWANG, June, Suwon-si Gyeonggi-do 16677 (KR)
(74) Representative: Gulde & Partner
(86) International application number: PCT/KR2024/001071
(87) International publication number: WO 2024/158193

(57) **Abstract**

The present disclosure relates to a 5G or 6G communication system for supporting higher data transmission rates. According to various embodiments of the present disclosure, a method performed by a user equipment (UE) in a wireless communication system may comprise the steps of: transmitting, to a first cell, a UE capability information message indicating whether the UE supports an automatic neighbor cell relation (ANR); receiving, from the first cell, a message including measurement configuration information; performing measurement on the basis of the measurement configuration information; receiving a master information block (MIB) from a second cell; determining, on the basis of the MIB, whether to perform reporting on a result of the performed measurement; and reporting the measurement result to the first cell.

## Description

### [Technical Field]

The disclosure relates generally to a wireless communication system and, more specifically, to a method and an apparatus for supporting automatic neighbor cell relation (ANR) for a network energy saving (NES) cell in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, according to requirement of an operation method for a network energy saving (NES) cell in a wireless communication system, a technology for supporting automatic neighbor cell relation (ANR) for the NES cell is needed.

### [Disclosure of Invention]

### [Technical Problem]

Based on the discussion as described above, the disclosure is to provide an apparatus and a method capable of seamless efficiency of services in a wireless communication system.

According to various embodiments of the disclosure, a method and an apparatus for supporting automatic neighbor cell relation (ANR) for a network energy saving (NES) cell in a wireless communication system are provided.

### [Solution to Problem]

According to various embodiments of the disclosure, a method performed by a user equipment (UE) in a wireless communication system may include transmitting, to a first cell, a UE capability information message indicating whether the UE supports automatic neighbor cell relation (ANR), receiving a message including measurement configuration information from the first cell, performing a measurement, based on the measurement configuration information, receiving a master information block (MIB) from a second cell, determining, based on the MIB, whether to report a result of the performed measurement, and reporting the result of the measurement to the first cell.

According to various embodiments of the disclosure, a UE in a wireless communication system may include at least one transceiver and a controller coupled with the at least one transceiver, wherein the controller may be configured to transmit, to a first cell, a UE capability information message indicating whether the UE supports automatic neighbor cell relation (ANR), receive a message including measurement configuration information from the first cell, perform a measurement, based on the measurement configuration information, receive a master information block (MIB) from a second cell, determine, based on the MIB, whether to report a result of the performed measurement, and report the result of the measurement to the first cell.

### [Advantageous Effects of Invention]

Various embodiments of the disclosure can provide an apparatus and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a wireless communication system according to various embodiments of the disclosure.
FIG. 2 illustrates a radio protocol structure of an LTE system according to various embodiments of the disclosure.
FIG. 3 illustrates a structure of a wireless communication system including a core network according to various embodiments of the disclosure.
FIG. 4 illustrates a radio protocol structure of an NR system according to various embodiments of the disclosure.
FIG. 5 illustrates a signal flow between a terminal and a base station for supporting automatic neighbor cell relation (ANR) according to various embodiments of the disclosure.
FIG. 6 illustrates a structure of signal transmission and reception for SIB-less network energy saving (NES) according to various embodiments of the disclosure.
FIG. 7 illustrates information provided by an SIB-less NES cell according to various embodiments of the disclosure.
FIG. 8 illustrates a signal flow between a terminal and at least one cell for supporting automatic neighbor cell relation (ANR) according to various embodiments of the disclosure.
FIG. 9 illustrates a signal flow between a terminal and multiple cells for supporting automatic neighbor cell relation (ANR) according to various embodiments of the disclosure.
FIG. 10 illustrates another signal flow between a terminal and multiple cells for supporting automatic neighbor cell relation (ANR) according to various embodiments of the disclosure.
FIG. 11 illustrates another signal flow between a terminal and multiple cells for supporting automatic neighbor cell relation (ANR) according to various embodiments of the disclosure.
FIG. 12 illustrates another signal flow between a terminal and at least one cell for supporting automatic neighbor cell relation (ANR) according to various embodiments of the disclosure.
FIG. 13 illustrates a structure of a UE according to various embodiments of the disclosure.
FIG. 14 illustrates a structure of a base station according to various embodiments of the disclosure.

### [Mode for the Invention]

Hereinafter, the operation principle of the disclosure will be described in detail in conjunction with the accompanying drawings. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

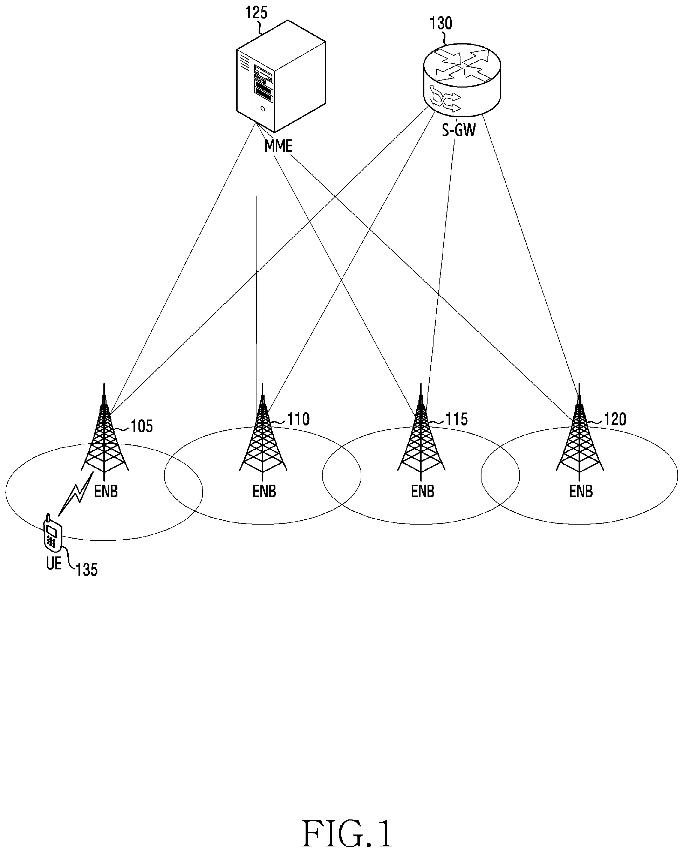

FIG. 1 illustrates a wireless communication system according to various embodiments of the disclosure. Referring to FIG. 1, as illustrated therein, a radio access network of an LTE system may include next-generation base stations (evolved node Bs, hereinafter eNBs, node Bs, or base stations) 105, 110, 115, and 120, a mobility management entity (MME) 125, and a serving gateway (S-GW) 130. A user equipment (hereinafter a UE or terminal) 135 may access an external network through the eNBs 105 to 120 and the S-GW 130.

In FIG. 1, according to an embodiment, the eNBs 105 to 120 may correspond to conventional node Bs of a universal mobile telecommunication system (UMTS). The eNBs may be connected to the UE 135 through a radio channel, and perform more complicated roles than the conventional node Bs. In the LTE system, since all user traffic including real-time services, such as voice over IP (VoIP) via the Internet protocol, may be serviced through a shared channel. Thus, a device that collects state information, such as buffer states, available transmit power states, and channel states of UEs, and performs scheduling accordingly is required, and the eNBs 105 to 120 may serve as the device. In general, one eNB may control multiple cells. For example, in order to implement a transfer rate of 100 Mbps, the LTE system may use orthogonal frequency division multiplexing (OFDM) as a radio access technology in a bandwidth of 20 MHz. Furthermore, the LTE system may employ an adaptive modulation & coding (hereinafter referred to as AMC) scheme for determining a modulation scheme and a channel coding rate according to a channel state of a UE. The S-GW 130 is a device that provides a data bearer, and may generate or remove a data bearer under the control of the MME 125. The MME 125 is a device responsible for various control functions as well as a mobility management function for a UE, and may be connected to multiple base stations.

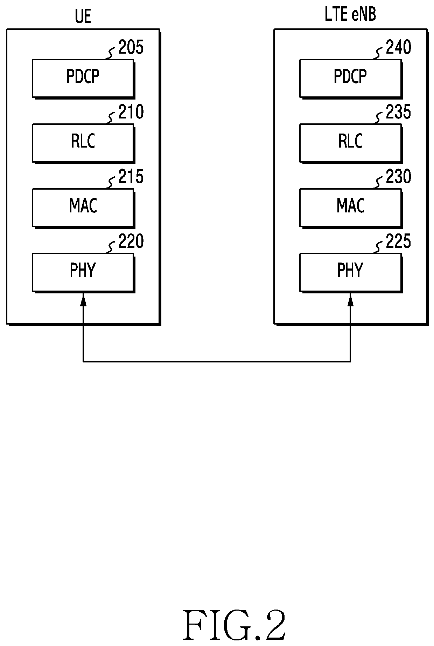

FIG. 2 illustrates a radio protocol structure of an LTE system according to various embodiments of the disclosure. Referring to FIG. 2, a radio protocol of an LTE system may include a packet data convergence protocol (PDCP) 205 or 240, a radio link control (RLC) 210 or 235, and a medium access control (MAC) 215 or 230 on each of UE and eNB sides.

According to an embodiment, the PDCP 205 or 240 may serve to perform operations, such as IP header compression/reconstruction. The main functions of the PDCP may be summarized as follows.
- Header compression and decompression: robust header compression (ROHC) only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to an embodiment, the RLC 210 or 235 may reconstruct a packet data unit (PDU) into appropriate sizes to perform an automatic repeat request (ARQ) operation and the like. The main functions of the RLC may be summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

According to an embodiment, the MAC 215 or 230 may be connected to several RLC layer devices configured in a single UE, and multiplex RLC PDUs into an MAC PDU and demultiplex RLC PDUs from an MAC PDU. The main functions of the MAC may be summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, a physical layer 220 or 225 may perform operations of channel-coding and modulating upper layer data, thereby obtaining OFDM symbols, and delivering the same through a radio channel. Alternatively, the physical layer 220 or 225 may perform operations of demodulating OFDM symbols received through the radio channel, channel-decoding the same, and delivering the same to the upper layer.

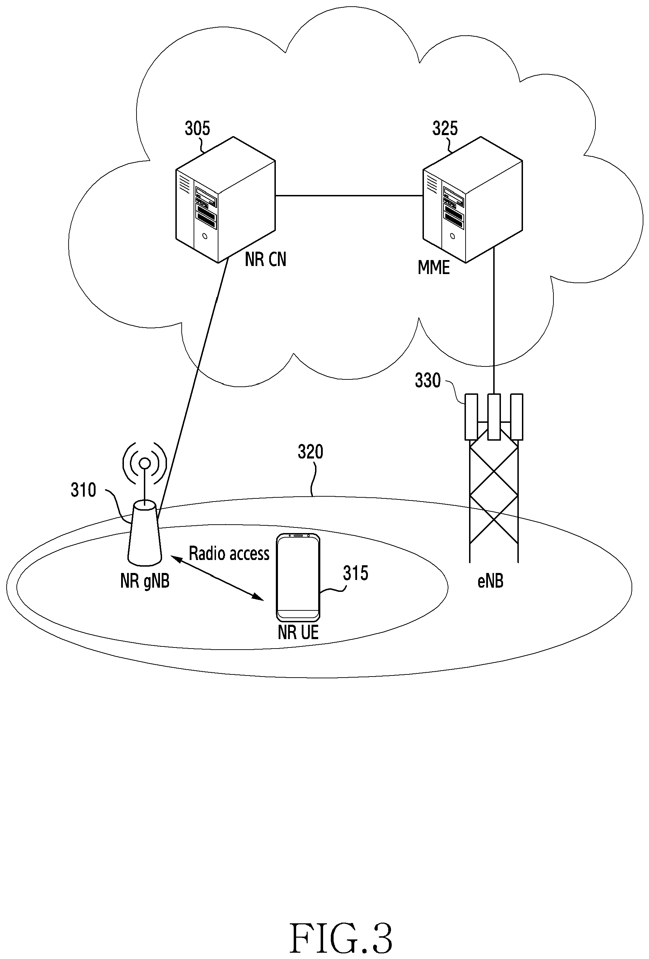

FIG. 3 illustrates a structure of a wireless communication system including a core network according to various embodiments of the disclosure. Referring to FIG. 3, a radio access network of a next-generation mobile communication system (hereinafter NR or 5G) may include a next-generation base station (new radio node B, hereinafter NR gNB or NR base station) 310, and a new radio core network (NR CN) 305. A user terminal (new radio user equipment, hereinafter NR UE or NR terminal) 315 may access an external network via the NR gNB 310 and the NR CN 305.

In FIG. 3, according to an embodiment, the NR gNB 310 may correspond to an evolved node B (eNB) of a conventional LTE system. The NR gNB may be connected to the NR UE 315 through a radio channel and provide outstanding services as compared to a conventional node B. In the next-generation mobile communication system, all user traffic may be serviced through a shared channel. Thus, a device that collects state information, such as buffer states, available transmit power states, and channel states of UEs, and performs scheduling accordingly is required, and the NR NB 310 may serve as the device. In general, one NR gNB may control multiple cells. In order to implement ultrahigh-speed data transfer beyond the current LTE, the NR may provide a wider bandwidth than the existing maximum bandwidth, may employ an orthogonal frequency division multiplexing (OFDM) as a radio access technology, and may additionally integrate a beamforming technology therewith. Furthermore, the NR may employ an adaptive modulation & coding (AMC) scheme for determining a modulation scheme and a channel coding rate according to a channel state of the UE. The NR CN 305 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN may be connected to an MME 325 via a network interface. An MME 325 may be connected to an eNB 330 that is an existing base station.

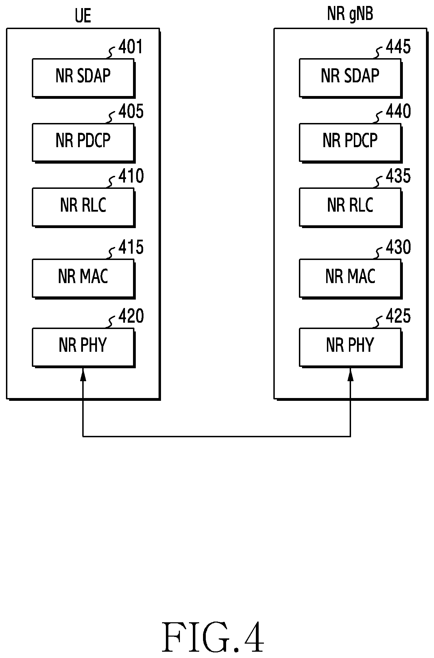

FIG. 4 illustrates a radio protocol structure of an NR system according to various embodiments of the disclosure. Referring to FIG. 4, a radio protocol of a next-generation mobile communication system may include an NR service data adaptation protocol (SDAP) 401 or 445, an NR PDCP 405 or 440, an NR RLC 410 or 435, and an NR MAC 415 or 430 on each of NR UE and NR base station sides.

The main functions of the NR SDAP 401 or 445 may include all or some of functions below.
- Transfer of user plane data
- Mapping between a QoS flow and a DRB for both DL and UL
- Marking QoS flow ID in both DL and UL packets
- Reflective QoS flow to DRB mapping for the UL SDAP PDUs

According to an embodiment, with regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

According to an embodiment, the main functions of the NR PDCP 405 or 440 may include at least some of functions below.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device may refer to a function of reordering PDCP PDU received from a lower layer in an order based on PDCP sequence numbers (SNs). The NR PDCP device may include a function of delivering data to the upper layer in a reordered sequence, or may include a function of delivering data to the upper layer directly without considering the sequence. The NR PDCP device may include a function of recording PDCP PDUs lost as a result of reordering, and may include a function of reporting the state of the lost PDCP PDUs to the transmitting side. The NR PDCP device may include a function of requesting retransmission of the lost PDCP PDUs.

According to an embodiment, the main functions of the NR RLC 410 or 435 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of, if there is a lost RLC PDU, delivering only RLC SDUs before the lost RLC PDU to the upper layer in sequence. The NR RLC device may include a function of, if multiple RLC SDUs segmented from one original RLC SDU have been received, reassembling the received RLC SDUs and transferring the same, and may include a function of rearranging the received RLC SDUs based on the RLC sequence number (SN) or PDCP sequence number (SN). The NR RLC device may include a function of recording RLC PDUs lost as a result of reordering, may include a function of reporting the state of the lost RLC PDUs to the transmitting side, and may include a function of requesting retransmission of the lost RLC PDUs. The NR RLC device may include a function of, if there is a lost RLC SDU, successively delivering only RLC SDUs before the lost RLC SDU to the upper layer, may include a function of, if a predetermined timer has expired although there is a lost RLC SDU, sequentially delivering all RLC SDUs received before the timer was started to the upper layer, or may include a function of, if a predetermined timer has expired although there is a lost RLC SDU, sequentially delivering all RLC SDUs received up to present to the upper layer. The NR RLC device may process RLC PDUs in the received order (regardless of the sequence number order, in the order of arrival) and deliver same to the PDCP device regardless of the order (out-of-sequence delivery). If RLC PDUs are segments, the NR RLC device may receive segments stored in a buffer or to be received later, reconstruct the segments into one whole RLC PDU, process the RLC PDU, and then deliver the processed RLC PDU to the NR PDCP device. The NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs received from the lower layer to the upper layer regardless of the order. The NR RLC device may include a function of, if multiple RLC SDUs segmented from one original RLC SDU have been received, reassembling the RLC SDUs and delivering the reassembled RLC SDUs, and may include a function of storing the RLC SN or PDCP SN of received RLC PDUs, and recording RLC PDUs lost as a result of reordering.

According to an embodiment, the NR MAC 415 or 430 may be connected to multiple NR RLC layer devices configured in one UE, and the main functions of the NR MAC may include all or some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, an NR PHY layer (e.g., physical layer) 420 or 425 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

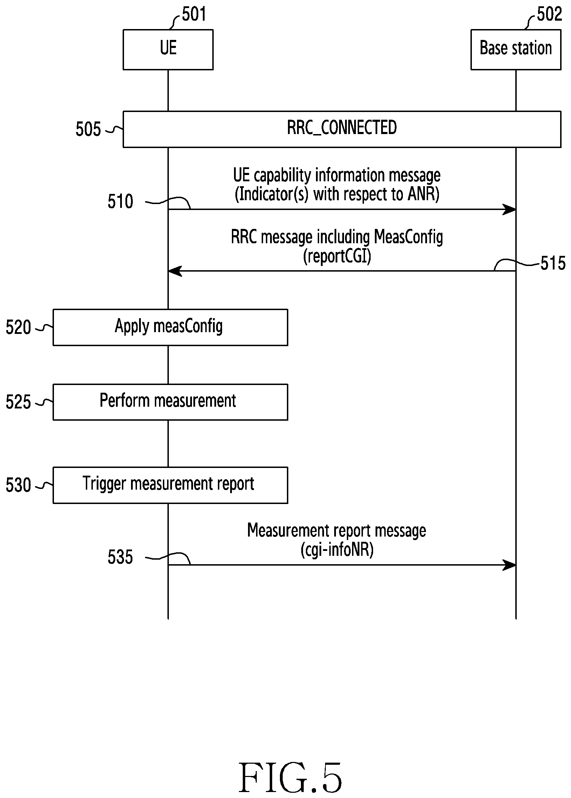

FIG. 5 illustrates a signal flow between a UE and a base station for supporting automatic neighbor cell relation (ANR) according to various embodiments of the disclosure. More specifically, FIG. 5 illustrates a procedure in which, in a next generation wireless communication system, a UE in an RRC connected mode (RRC_CONNECTED) transmits a measurement report message to a base station for automatic neighbor cell relation (ANR).

According to various embodiments of the disclosure, the purpose of ANR is to reduce the burden on a service provider operating a base station from manually managing neighbor cell relation (NCR). For example, a base station may allow a UE to detect whether there is a neighboring cell using a specific physical cell identity. The base station may configure the UE to acquire necessary information from a detected cell and report the acquired necessary information to the base station. Accordingly, the base station may manage NCR, based on the information provided by the UE.

Referring to FIG. 5, in step 505, a UE 501 may establish an RRC connection with a base station 502 to be in an RRC connected mode (RRC_CONNECTED).

In step 510, the UE 501 may transmit a UE capability information message (UECapabilityInformation message) to the base station 502 through a UE capability transmission procedure (UE capability transfer procedure). The UE capability information message may include at least one capability parameter related to whether automatic neighbor relation (ANR) is supported. For example, the at least one capability parameter may include at least one of indicators (e.g., nr-CGI-Reporting, nr-CGI-Reporting-ENDC, nr-CGI-Reporting-NEDC, and nr-CGI-Reporting-NRDC) indicating whether the UE has a capability of identifying system information (SI) obtained from a neighboring NR cell (neighboring intra-frequency or inter-frequency NR cell), obtaining information related to a cell global identity (CGI), and reporting the obtained information to the base station, indicators (e.g., gNB-ID-Length-Reporting, gNB-ID-Length-Reporting-ENDC, gNB-ID-Length-Reporting-NEDC, and gNB-ID-Length-Reporting-NR-DC) indicating whether the UE has a capability of identifying system information obtained from a neighboring NR cell, obtaining a gNB ID length, and reporting the obtained information to the base station, an indicator (e.g., nr-CGI-Reporting-NPN) indicating whether the UE has a capability of identifying system information obtained from a neighboring non public network (NPN) cell (e.g., neighboring intra-frequency or inter-frequency NR NPN cell), obtaining CGI information related to the NPN, and reporting the obtained information to the base station, and indicators (e.g., nr-AutonomousGaps-ENDC, nr-AutonomousGaps-NEDC, and nr-AutonomousGaps-NRDC) indicating whether the UE has a capability of identifying system information obtained from a neighboring NR cell through an autonomous gap according to a configuration indicating use (useAutonomousGaps) of autonomous gaps, the configuration being received from the base station, obtaining information related to the cell, and reporting the obtained information. Specifically, the parameters described above may refer to the parameters shown in the following table.

| **Definitions for parameters** | **Per** | **M** | **FDD-TDD DIFF** | **FR1-FR2 DIFF** |
|---|---|---|---|---|
| ***gNB-ID-LengthReporting-r17*** | UE | CY | No | No |
| Indicates whether the UE supports acquisition and reporting of gNB ID length from a neighbouring intra-frequency or inter-frequency NR cell by reading the SI of the neighbouring cell and reporting the acquired gNB ID length to the network as specified in TS 38.331 [9] when (NG)EN-DC and NE-DC are not configured or, when consistent DRX is configured in NR-DC. The consistent DRX configuration implies that MN and SN have the same DRX cycle and on-duration configured by MN completely contains on-duration configured by SN. It is mandated if UE supports NR CGI reporting (NG)EN-DC and NE-DC are not configured or, when consistent DRX is configured in NR-DC. | | | | |
| ***gNB-ID-LengthReporting-ENDC-r17*** | UE | CY | No | No |
| Indicates whether the UE supports acquisition and reporting of gNB ID length from a neighbouring intra-frequency or inter-frequency NR cell by reading the SI of the neighbouring cell and reporting the acquired gNB ID length to the network as specified in TS 38.331 [9] when the (NG)EN-DC is configured. It is mandated if UE supports NR CGI reporting when (NG)EN-DC is configured. | | | | |
| ***gNB-ID-LengthReporting-NEDC-r17*** | UE | CY | No | No |
| Indicates whether the UE supports acquisition and reporting of gNB lID length from a neighbouring intra-frequency or inter-frequency NR cell by reading the SI of the neighbouring cell and reporting the acquired gNB ID length to the network as specified in TS 38.331 [9] when the NE-DC is configured. It is mandated lif UE supports NR CGI reporting when NE-DC is configured. | | | | |
| ***gNB-ID-LengthReporting-NRDC-r17*** | UE | CY | No | No |
| Indicates whether the UE supports acquisition and reporting of gNB ID length from a neighbouring intra-frequency or inter-frequency NR cell by reading the SI of the neighbouring cell and reporting the acquired gNB ID length to the network as specified in TS 38.331 [9] when the NR-DC is configured wherein MN and SN have different DRX cycles, or on-duration configured by MN does not contain on-duration configured by SN if the DRX cycles are the same. It is mandated if UE supports NR CGI reporting when NR-DC is configured. | | | | |

| **Definitions for parameters** | **Per** | **M** | **FDD-TDD DIFF** | **FR1-FR2 DIFF** |
|---|---|---|---|---|
| ***nr-AutonomousGaps-ENDC-r16*** | UE | No | No | Yes |
| Defines whether the UE supports, upon configuration of *useAutonomousGaps* by the network, acquisition of relevant information from a neighbouring NR cell by reading the SI of the neighbouring cell using autonomous gap and reporting the acquired information to the network as specified in TS 38.331 [9] when (NG)EIN-IDC is configured. If this parameter is indicated for FR1 and FR2 differently, each indication corresponds to the frequency range of measured target cell. | | | | |
| ***nr-AutonomousGaps-NEDC-r16*** | UE | No | No | Yes |
| Defines whether the UE supports, upon configuration of *useAutonomousGaps* by the network, acquisition of relevant information from a neighbouring INR cell by reading the SI of the neighbouring cell using autonomous gap and reporting the acquired information to the network as specified in TS 38.331 [9] when NE-DC is configured. If this parameter is indicated for FR1 and FR2 differently, each indication corresponds to the frequency range of measured target cell. | | | | |
| ***nr-AutonomousGaps-NRDC-r16*** | UE | No | No | Yes |
| Defines whether the UE supports, upon configuration of *useAutonomousGaps* by the network, acquisition of relevant information from a neighbouring NR cell by reading the SI of the neighbouring cell using autonomous gap and reporting the acquired information to the network as specified in TS 38.331 [9] when NR-DC is configured. If this parameter is indicated for FR1 and FR2 differently, each indication corresponds to the frequency range of measured target cell. | | | | |
| ***nr-CGI-Reporting*** | UE | Yes | No | No |
| Defines whether the UE supports acquisition of relevant CGI-information from a neighbouring intra-frequency or inter-frequency NR cell by reading the SI of the neighbouring cell and reporting the acquired information to the network as specified in TS 38.331 [9] when (NG)EN-DC and NE-DC are not configured or, when consistent DRX is configured in NR-DC. The consistent DRX configuration implies that MN and SN have the same DRX cycle and on-duration configured by MN completely contains on-duration configured by SN. It is optional for RedCap UEs. | | | | |

| **Definitions for parameters** | **Per** | **M** | **FDD-TDD DIFF** | **FR1-FR2 DIFF** |
|---|---|---|---|---|
| ***nr-CGI-Reporting-ENDC*** | UE | Yes | No | No |
| Defines whether the UE supports acquisition of relevant CGI-information from a neighbouring intra-frequency or inter-frequency NR cell by reading the SI of the neighbouring cell and reporting the acquired information to the network as specified in TS 38.331 [9] when the (NG)EN-DC is configured. | | | | |
| ***nr-CGI-Reporting-NEDC*** | UE | Yes | No | No |
| Defines whether the UE supports acquisition of relevant information from a neighbouring intra-frequency or inter-frequency NR cell by reading the SI of the neighbouring cell and reporting the acquired information to the network as specified in TS 38.331 [9] when the NE-DC is configured. | | | | |
| ***nr-CGI-Reporting-NPN-r16*** | UE | CY | No | No |
| Defines whether the UE supports acquisition of NPIN-relevant CGI-information from a neighbouring intra-frequency or inter-frequency NR NPN cell by reading the SI of the neighbouring cell and reporting the acquired information to the network as specified in TS 38.331 [9]. If UE supports NPN, UE shall report this capability. It is optional for RedCap UEs. | | | | |
| ***nr-CGI-Reporting-NRDC*** | UE | Yes | No | No |
| Defines whether the UE supports acquisition of relevant information from a neighbouring intra-frequency or inter-frequency NR cell by reading the SI of the neighbouring cell and reporting the acquired information to the network as specified in TS 38.331 [9] when the NR-DC is configured wherein MN and SN have different DRX cycles, or on-duration configured by MN does not contain on-duration configured by SN if the DRX cycles are the same. | | | | |

In step 515, the base station 502 may transmit an RRC message including measurement configuration information (measConfig) to the UE 501. The RRC message transmitted by the base station may refer to an RRC connection reconfiguration message (RRCReconfiguration) or an RRC connection resumption message (RRCResume). The measurement configuration information included in the RRC message may include at least one of the following.

### - measObjectToAddModList

According to an embodiment, measObjectToAddModList may include a MeasObjectToAddModList information element (IE). The MeasObjectToAddModList IE may configure one or multiple values of MeasObjectToAddMod. Each MeasObjectToAddMod may include measObjectId and include measObject corresponding to measObjectId. The measObject may include one of a measurement object for NR (e.g., measObjectNR) and a measurement object for EUTRA (e.g., measObjectEUTRA).

### - reportConfigToAddModList

According to an embodiment, reportConfigToAddModList may include a ReportConfigToAddModList IE. The ReportConfigToAddModList IE may configure one or multiple values of ReportConfigToAddMod. Each ReportConfigToAddMod may include ReportConfigId and include reportConfig corresponding to ReportConfigId. The reportConfig may include one of a reporting configuration for NR (e.g., reportConfigNR) and a reporting configuration for InterRAT (e.g., reportConfigInterRAT). In various embodiments of the disclosure, at least one value of ReportConfigId having reportType set to reportCGI may be present in reportConfigNR. The reportCGI may include ReportCGI, and ReportCGI may configure at least one of one or multiple values of cellForWhichToReportCGI and a useAutonomousGaps indicator. Specifically, cellForWhichToReportCGI may include one or multiple values of PhysCellID (or PhysCellIdRange), and the useAutonomousGaps indicator may indicate whether the UE is able to obtain system information from an NR neighbor cell by using autonomous gaps.

### - measIdToAddModList

According to an embodiment, measIdToAddModList may include a MeasIdToAddModList IE. The MeasIdToAddModList IE may configure one or multiple values of MeasIdToAddMod. Each MeasIdToAddMod may include measId and include measObjectId and reportConfigId corresponding to measId.

In step 520, the UE 501 may apply the measurement configuration information received from the base station 502. For example, if reportType is configured to be reportCGI in reportConfig associated with a particular measID (if the reportType is set to reportCGI in the reportConfig associated with this measId), the UE may operate a T321 timer by configuring different T321 timer values, based on which RAT (E-UTRA or NR) the measObject associated with the measID considers, which frequency band is considered (FR1 or FR2) if NR is considered, and whether useAutonomousGaps is included in the reportConfig associated with the measID. Alternatively, the UE may operate a T321 timer by configuring different T321 timer values according to RedCap UE with 1 Rx branch or a frequency region (FR1 or FR2).

In step 525, the UE 501 may perform a measurement by applying the measurement configuration information received in step 520.

In step 530, the UE 501 may determine whether a measurement report is triggered. For example, if reportConfig having reportType set to reportCGI is included for each measId included in measIdList belonging to VarMeasConfig, when a cell having a physical cell identity matching a value of cellForWhichToReportCGI included in reportConfig belonging to the VarMeasConfig is detected on associated measObject, the UE may consider that the cell is applicable for measurement report triggering (consider the cell detected on the associated measObject which a physical cell identity matching the value of the cellForWhichToReportCGI included in the corresponding reportConfig within the VarMeasConfig to be applicable). According to an embodiment, the UE may detect a cell if at least a synchronization signal block (SSB) (synchronization signal (SS)/physical broadcast channel (PBCH) block) is transmitted from the cell, the UE receives same, and a predetermined condition is satisfied. A detailed description related thereto may be referred to in Clauses 4.2.2.3 and 4.2.2.4 of 3GPP TS 38.133. In a case where reportType is set to reportCGI, if the UE obtains SIB1 for a requested cell or detects that SIB1 is not transmitted from the requested cell, the UE may stop the T321 timer. Then, the UE may include, for a corresponding measId, a measurement report entry in VarMeasReportList, configure numberOfReportsSent defined in VarMeasReportList to be 0, and perform a measurement reporting procedure. If the T321 timer expires for the corresponding measId, the UE may include, for the measId, a measurement report entry in VarMeasReportList, configure numberOfReportsSent defined in VarMeasReportList to be 0, and perform a measurement reporting procedure.

In step 535, the UE 501 may transmit a measurement report message (MeasurementReport message) to the base station 502. The UE may configure measResult in a measurement report message for each measId for which a measurement reporting procedure has been triggered. For example, the UE may set, to measId, a measurement identity for which a measurement report has been triggered. In a case where there is at least one possible neighboring cell for reporting (if there is at least one applicable neighboring cell to report), if a cell indicated by cellForWhichReportCGI is an NR cell, the UE may perform the following steps to transmit a measurement report message including cgi-InfoNR to the base station.
- If plmn-IdentityInfoList of cgi-info is obtained from the NR cell indicated by cellForWhichReportCGI (if plmn-IdentityInfoList of the cgi-Info for the concerned cell has been obtained)

According to an embodiment, the UE may include, in cgi-InfoNR, plmn-IdentityInfoList including plmn-IdentityList, trackingAreaCode (if available), ranac (if available), cellIdentity, and cellReservedForOperatorUse for each entry of plmn-IdentityInfoList. The UE may include frequencyBandList in cgi-InfoNR, if available. If gNB-ID-Length is being broadcast for each PLMN-IdentityInfo present in plmn-IdentityInfoList, the UE may include gNB-ID-Length in cgi-InfoNR.
- If npn-IdentityInfoList of cgi-info is obtained from the NR cell indicated by cellForWhichReportCGI (if npn-IdentityInfoList of the cgi-Info for the concerned cell has been obtained)

According to an embodiment, the UE may include, in cgi-InfoNR, npn-IdentityInfoList including npn-IdentityList, trackingAreaCode (if available), ranac (if available), cellIdentity, and cellReservedForOperatorUse for each entry of npn-IdentityList. If gNB-ID-Length is being broadcast for each NPN-IdentityInfo included in NPN-IdentityInfoList, the UE may include gNB-ID-Length in cgi-InfoNR. The UE may include cellReservedForOtherUse in cgi-InfoNR, if available.
- If the NR cell indicated by cellForWhichReportCGI indicates that SIB1 is not broadcast, through a master information block (MIB) (else if MIB indicates the SIB1 is not broadcast)

According to an embodiment, the UE may include, in cgi-InfoNR, noSIB1 including ssb-SubCarrierOffset and pdcch-ConfigSIB 1 obtained from the MIB of the cell.

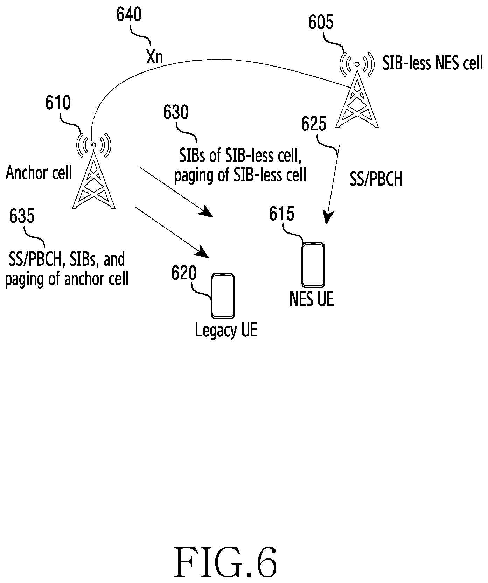

FIG. 6 illustrates a structure of signal transmission and reception for SIB-less network energy saving (NES) according to various embodiments of the disclosure. More specifically, FIG. 6 is a diagram illustrating an SIB-less NES concept.

According to an embodiment, an SIB-less NES cell 605 may refer to a cell that does not transmit an SIB, with the aim of reducing power consumption of network equipment. Additionally, the aforementioned cell 605 may also not transmit a paging message. Instead, an anchor cell 610 located near the SIB-less NES cell may transmit the SIB and/or paging message 630 of the SIB-less NES cell. The SIB-less NES cell and the anchor cell may be connected to each other via an interface (e.g., Xn) therebetween to exchange necessary predetermined information through communication

(640). In various embodiments of the disclosure, a situation where the SIB-less NES cell still broadcasts an SSB and an MIB (e.g., an SS/PBCH 625) may be assumed. An NES UE 615 capable of accessing the SIB-less NES cell may determine whether the cell is an SIB-less NES cell, based on predetermined information included in an MIB broadcast by the SIB-less NES cell, and obtain an SIB and paging of the SIB-less NES cell from the neighboring anchor cell to access the SIB-less NES cell. Accordingly, the SIB-less NES cell may also be referred to as a non-anchor NES cell without SIB.

According to an embodiment, a legacy UE 620 may not be able to distinguish between an SIB-less NES cell and a legacy cell. However, since the SIB-less NES cell does not broadcast an SIB, the legacy UE may consider the aforementioned cell as being barred. Alternatively, the SIB-less NES cell may cause the cell to be barred through existing information (e.g., cellBarred = barred and/or intraFreqReselection = notAllowed) included in the MIB of the SIB-less NES cell so as to prevent the legacy UE from performing cell (re)selection for the above cell.

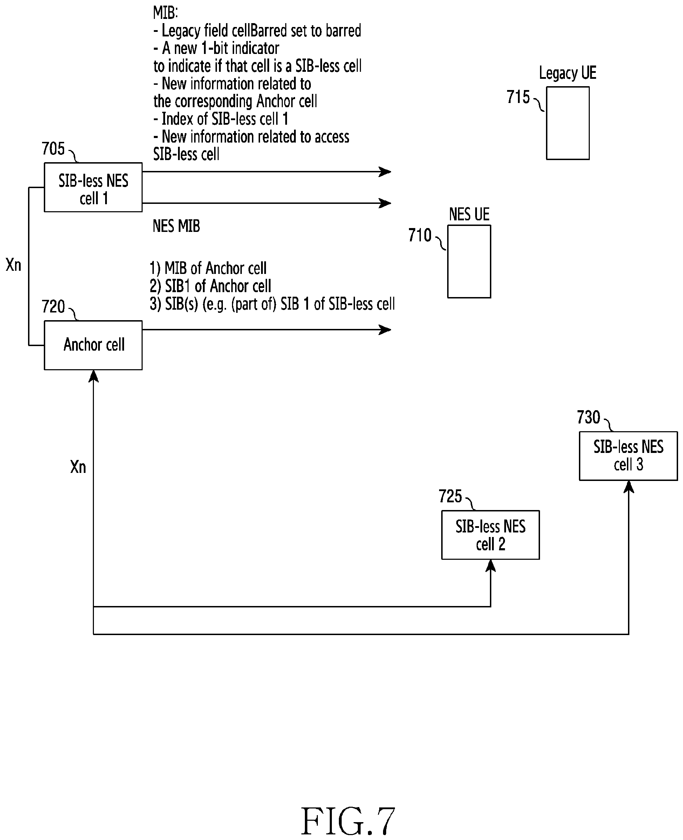

FIG. 7 illustrates information provided by an SIB-less NES cell according to various embodiments of the disclosure. More specifically, FIG. 7 is a diagram illustrating information of an MIB provided by an SIB-less NES cell and system information provided by an anchor cell.

According to an embodiment, an SIB-less NES cell 705 may broadcast an SSB, an MIB, and/or a new NES MIB. According to an embodiment, in a case of a general cell rather than an SIB-less NES cell, the general cell may broadcast system information including SIB1 and may also broadcast a general MIB. The general MIB broadcast by a legacy general cell may include the following information (refer to 3GPP TS 38.331 ASN.1).

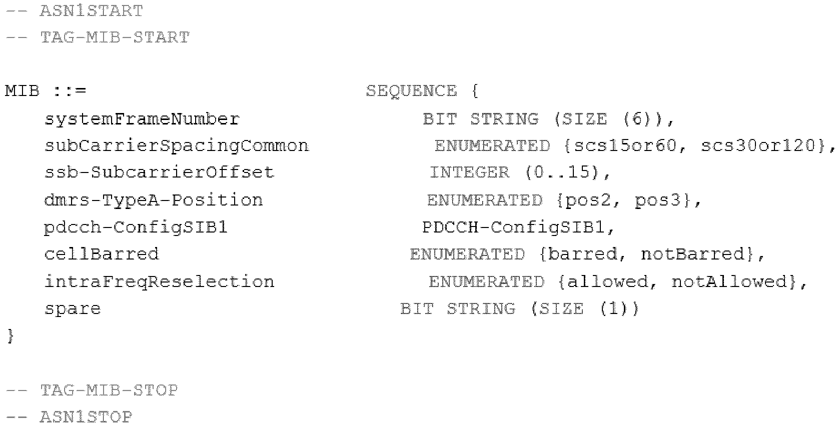

According to various embodiments of the disclosure, the SIB-less NES cell may broadcast an MIB by using at least one parameter of a conventional MIB as information corresponding to the SIB-less NES cell and/or information corresponding to an anchor cell 720 rather than using same as a general purpose. Specifically, a spare field of the MIB represents a bit string reserved for future use, and the SIB-less NES cell may use the spare field to indicate that the cell is an SIB-less NES cell (e.g., noSIBNESCell) or whether NES UEs 710 are able to access the SIB-less NES cell.

According to an embodiment, if the SIB-less NES cell uses the spare field of the MIB as described above, the NES UEs 710 may disregard cellBarred field information. That is, even if a cellBarred field is configured to be "barred," an NES UE may not consider the SIB-less NES cell as being barred. Alternatively, a conventional MIB may include information that is unnecessary for a cell operating as an SIB-less NES cell. For example, fields such as subCarrierSpacingCommon, ssb-SubCarrierOffset, dmrs-TypeA-Position, and pdcch-ConfigSIB1 correspond to information required by the UE for a subsequent operation such as SIB1 reception from a cell from which an MIB is received. However, since the SIB-less NES cell does not directly broadcast SIB1, the above fields may be unnecessary. Therefore, according to various embodiments of the disclosure, the SIB-less NES cell may not use bits allocated to at least one of fields defined in a conventional MIB as an original purpose of the field, and may use the at least one field to indicate information corresponding to the SIB-less NES cell and/or information corresponding to the anchor cell. For example, the SIB-less NES cell may directly broadcast an MIB including at least one of the following pieces of information.

### - Index or ID information of corresponding SIB-less NES cell

According to an embodiment, one anchor cell may transmit SIBs (e.g., including at least one of information for accessing the SIB-less NES cell or information present in conventional SIB 1) of one or more SIB-less NES cells. Therefore, in this case, in order to distinguish each SIB-less NES cell corresponding to the anchor cell, an index or information (e.g., PCI or CGI) indicating a specific SIB-less NES cell may be required. In addition, the MIB broadcast by the SIB-less NES cell may further include information on an ID (e.g., a TAC or a TAI) of a tracking area of the SIB-less NES cell and/or an ID of a RAN-based notification area.

### - Random access radio resource information index

According to an embodiment, the NES UE may acquire information for accessing the SIB-less NES cell from the anchor cell, and the index may indicate whether use of random access radio resource information is needed for the acquisition.

### - Information related to anchor cell.

According to an embodiment, the information related to the anchor cell may be one of the following pieces of information. ID information (e.g., a physical cell identity (PCI) or a cell global identity (CGI) of the anchor cell) of the anchor cell corresponding to the SIB-less NES cell, frequency information (e.g., ARFCN-ValueNR), or a gNB-ID Length of the anchor cell

### - New cellBarred field and/or intraFreqReselection field for preventing NES UE from camping on SIB-less NES cell

According to an embodiment, since an MIB including only a small number of bits may be broadcast, the number of bits present in existing fields of a conventional MIB may be insufficient for the SIB-less NES cell to include new information. Therefore, in various embodiments of the disclosure, a new NES MIB including the aforementioned information may be defined separately, and the SIB-less NES cell may broadcast the new NES MIB.

According to an embodiment, the anchor cell 720 may broadcast information on at least one SIB-less NES cell by using a new SIB or a conventional SIB(s). For example, the anchor cell may periodically broadcast SIBs of at least one SIB-less NES cell 705, 725, and 730, or may employ an on-demand SI method to effectively provide same to the NES UE. The anchor cell may include an explicit indicator in at least one of an MIB, SIB1, or a new SIB to indicate that the anchor cell is an anchor cell, or may also include scheduling information of an SI message configured by the SIB(s) of the SIB-less NES cell(s) to represent that the anchor cell is an anchor cell. According to an embodiment, the anchor cell may broadcast information of an SIB-less NES cell managed by the anchor cell by using a conventional SIB or a new SIB. The information of an SIB-less NES cell broadcast by the anchor cell may include some of information broadcast by conventional SIB 1, such as cellAccessRelatedInfo, servingCellConfigCommon, ims-EmergencySupport, ecallOverIMS-Support, ue-TimersAndConstants, uac-BarringInfo, and useFullResumeID. The information broadcast by conventional SIB1 may be as follows (see 3GPP TS 38.331 ASN.1).

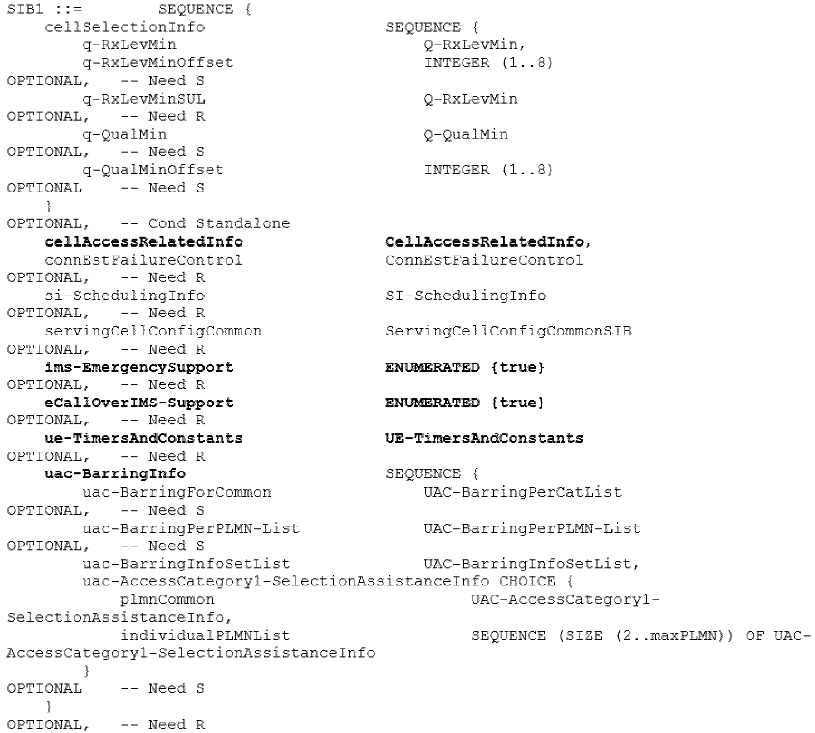

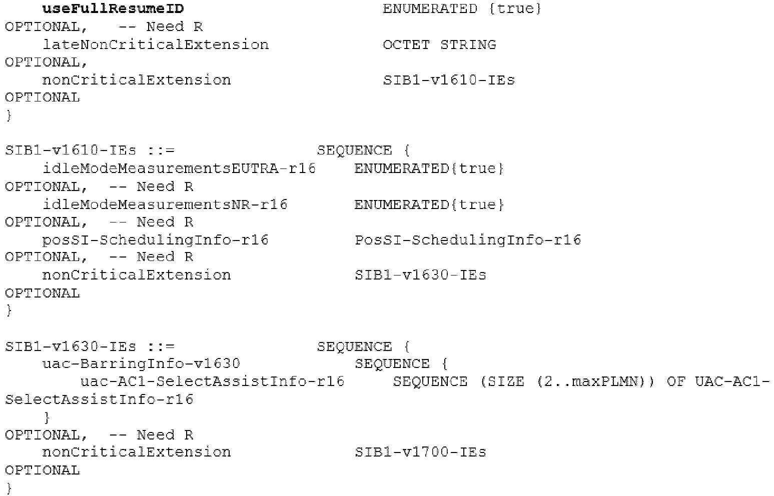

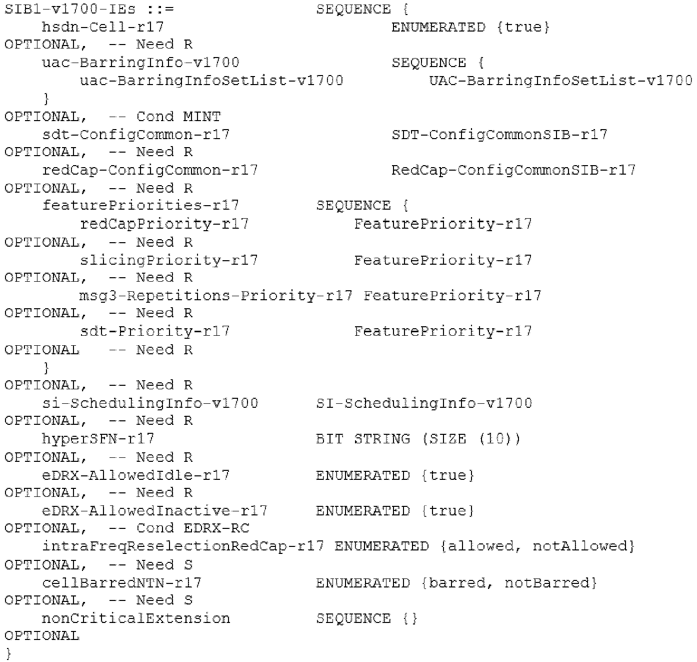

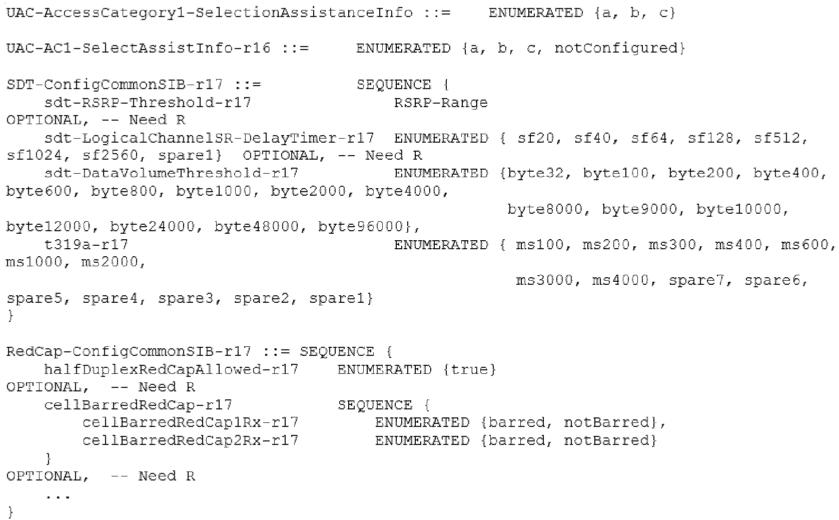

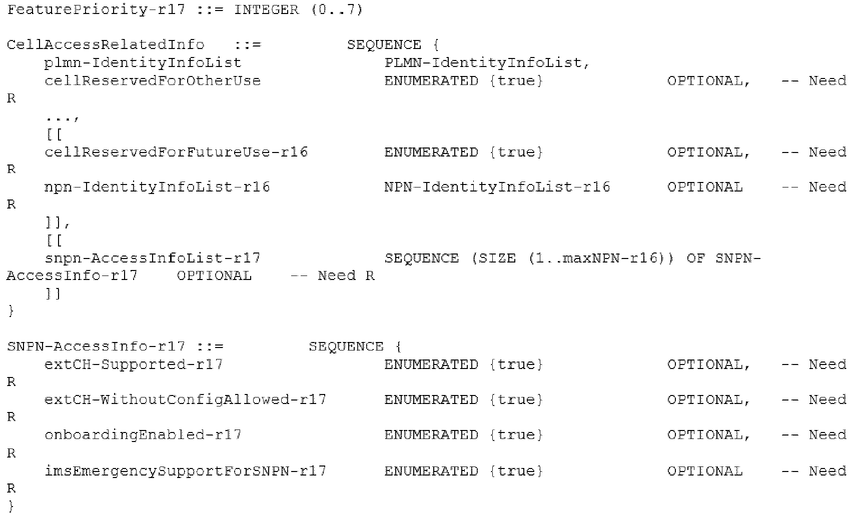

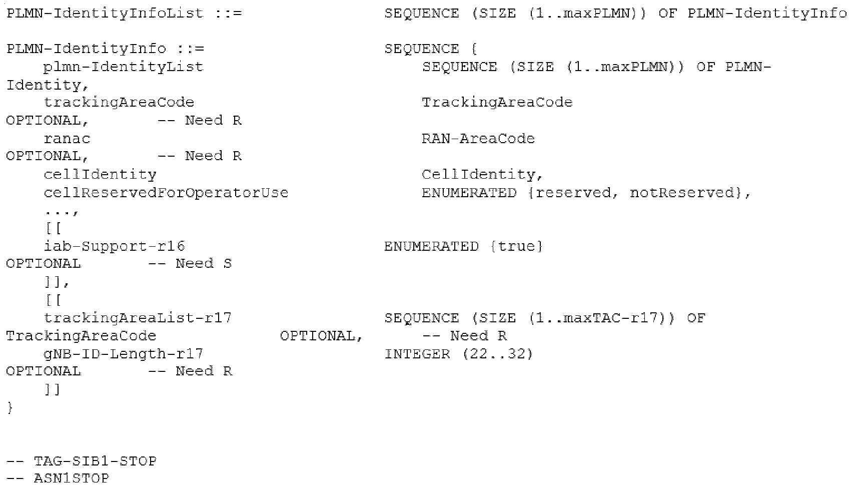

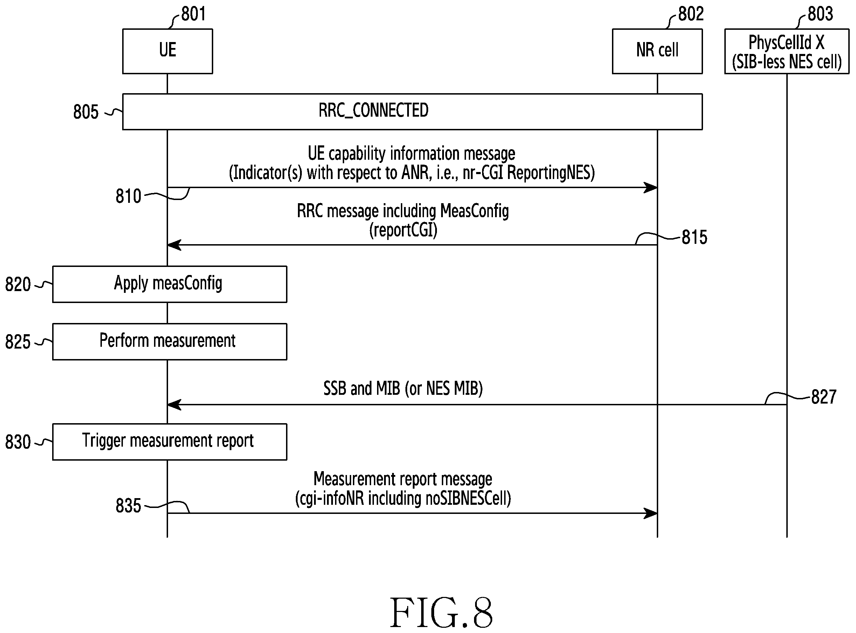

FIG. 8 illustrates a signal flow between a UE and at least one cell for supporting automatic neighbor cell relation (ANR) according to various embodiments of the disclosure. More specifically, FIG. 8 illustrates a procedure in which, in a next generation mobile communication system, a UE in an RRC connected mode (RRC_CONNECTED) transmits a measurement report message to a base station for automatic neighbor cell relation.

According to an embodiment, the purpose of ANR is to reduce the burden on a service provider operating a base station from manually managing neighbor cell relation (NCR). For example, a base station may allow a UE to detect whether there is a neighboring cell using a specific physical cell identity (PCId). The base station may cause the UE to acquire information required by the base station from a detected cell and report the acquired information to the base station. The base station may manage NCR, based on the information provided by the UE.

According to various embodiments of the disclosure, an ANR operation in which a UE may detect an SIB-less NES cell, obtain information required by a base station for the SIB-less NES cell, and report the information to the base station is described.

Referring to FIG. 8, in step 805, a UE 801 may establish an RRC connection with a base station 802 to be in an RRC connected mode (RRC_CONNECTED).

In step 810, the UE 801 may transmit a UE capability information message (UECapabilityInformation message) to the base station 802 through a UE capability transmission procedure (UE capability transfer procedure). The UE capability information message may include a predetermined capability parameter related to whether automatic neighbor relation (ANR) is supported, as in the embodiments described above. Additionally, according to an embodiment of the disclosure, the UE may include, in the UE capability information message, an indicator (nr-CGI-ReportingNES) indicating whether the UE has a capability of identifying an MIB broadcast by a neighboring NR SIB-less NES cell (e.g., neighboring intra-frequency or inter-frequency NR SIB-less NES cell), obtaining information related to a CGI, and reporting the obtained information to the base station.

In step 815, the base station 802 may transmit an RRC message including measurement configuration information (measConfig) to the UE 801. The RRC message transmitted by the base station may refer to an RRC connection reconfiguration message (RRCReconfiguration) or an RRC connection resumption message (RRCResume). The measurement configuration information included in the RRC message transmitted by the base station may include at least one of the following.

### - measObjectToAddModList

According to an embodiment, measObjectToAddModList may include a MeasObjectToAddModList IE. The MeasObjectToAddModList IE may configure one or multiple values of MeasObjectToAddMod. Each MeasObjectToAddMod may include measObjectId and include measObject corresponding to measObjectId. The measObject may include at least one of a measurement object for NR (e.g., measObjectNR) and a measurement object for EUTRA (e.g., measObjectEUTRA).

### - reportConfigToAddModList

According to an embodiment, reportConfigToAddModList may include a ReportConfigToAddModList IE. The ReportConfigToAddModList IE may configure one or multiple values of ReportConfigToAddMod. Each ReportConfigToAddMod may include ReportConfigId and include reportConfig corresponding to ReportConfigId. The reportConfig may include at least one of a reporting configuration for NR (e.g., reportConfigNR) and a reporting configuration for InterRAT (e.g., reportConfigInterRAT). According to embodiments of the disclosure, at least one value of ReportConfigId having reportType set to reportCGI may be present in reportConfigNR. The reportCGI may include ReportCGI, and ReportCGI may configure at least one of one or multiple values of cellForWhichToReportCGI and a useAutonomousGaps indicator. Specifically, cellForWhichToReportCGI may include one or multiple values of PhysCellID (or PhysCellIdRange), and the useAutonomousGaps indicator may indicate whether the UE is able to obtain system information from an NR neighbor cell by using autonomous gaps. According to an embodiment, cellForWhichToReportCGI may be configured to include PhysCellID as PhysCellId x 803. However, this merely corresponds to an example, and a separate indicator may also be set in reportCGI together to represent ANR for an SIB-less NES cell

### - measIdToAddModList

According to an embodiment, measIdToAddModList may include a MeasIdToAddModList IE. The MeasIdToAddModList IE may configure one or multiple values of MeasIdToAddMod. Each MeasIdToAddMod may include measId and include measObjectId and reportConfigId corresponding to measId.

In step 820, the UE 801 may apply the measurement configuration information received from the base station 802. For example, if reportType is configured to be reportCGI in reportConfig associated with a particular measID (if the reportType is set to reportCGI in the reportConfig associated with this measId), the UE may operate a T321 timer by configuring different T321 timer values according to which RAT (E-UTRA or NR) the measObject associated with the measID considers, which frequency band is considered (FR1 or FR2) if NR is considered, and whether useAutonomousGaps is included in the reportConfig associated with the measID. Alternatively, the UE may operate a T321 timer by configuring different T321 timer values according to RedCap UE with 1 Rx branch or a frequency region (FR1 or FR2).

In step 825, the UE 801 may perform a measurement by applying the measurement configuration information received in step 820.

In step 830, the UE 801 may determine whether a measurement report is triggered. For example, if reportConfig having reportType set to reportCGI is included for each measId included in measIdList belonging to VarMeasConfig, when a cell having a physical cell identity matching a value of cellForWhichToReportCGI included in reportConfig belonging to the VarMeasConfig is detected on associated measObject, the UE may consider that the cell is applicable for measurement report triggering (consider the cell detected on the associated measObject which a physical cell identity matching the value of the cellForWhichToReportCGI included in the corresponding reportConfig within the VarMeasConfig to be applicable). The UE may detect a cell if at least an SSB is transmitted from the cell (827), the UE receives same, and a predetermined condition is satisfied. A detailed description may be referred to in Clauses 4.2.2.3 and 4.2.2.4 of TS 38.133. Accordingly, the UE may obtain an MIB or a new NES MIB 827 from an SIB-less NES cell 803. According to various embodiments of the disclosure, the MIB or new NES MIB may be called an MIB. In a case where reportType is set to reportCGI, if the UE obtains SIB1 for a requested cell or detects that SIB1 is not transmitted from the requested cell (e.g., if SIB1 is not transmitted in the MIB or noSIBNESCell is broadcast in the MIB), the UE may stop the T321 timer. The UE may include, for a corresponding measId, a measurement report entry in VarMeasReportList, configure numberOfReportsSent defined in VarMeasReportList to be 0, and perform a measurement reporting procedure. If the T321 timer expires for the corresponding measId, the UE may include, for the measId, a measurement report entry in VarMeasReportList, configure numberOfReportsSent defined in VarMeasReportList to be 0, and perform a measurement reporting procedure.

In step 835, the UE 801 may transmit a measurement report message (MeasurementReport message) to the base station 802. The UE may configure measResult in a measurement report message for each measId for which a measurement reporting procedure has been triggered. For example, the UE may set, to measId, a measurement identity for which a measurement report has been triggered. In a case where there is at least one possible neighboring cell for reporting (if there is at least one applicable neighboring cell to report), if a cell indicated by cellForWhichReportCGI is the NR cell 803, the UE may perform at least one of the following steps to transmit a measurement report message including cgi-InfoNR to the base station.

### - If the cell indicated by cellForWhichReportCGI is an NR cell

According to an embodiment, if the MIB indicates that SIB1 is not broadcast (else if MIB indicates the SIB1 is not broadcast), the UE may include, in cgi-InfoNR, noSIB1 including ssb-SubCarrierOffset and pdcch-ConfigSIB 1 obtained from the MIB of the corresponding cell. The UE may include, in cgi-InfoNR, a noSIBNESCell indicator included in the MIB, if available. According to an embodiment, the UE including the noSIBNESCell indicator in cgi-InfoNR may be limited to a case where the UE has a capability for nr-CGI-ReportinNES. The above indicator is included whereby the base station 802 may identify that the corresponding cell is an SIB-less NES Cell.

### - If the cell indicated by cellForWhichReportCGI is an NR cell

According to an embodiment, if a noSIBNESCell indicator is broadcast from the corresponding cell in the MIB, the UE may include the noSIBNESCell indicator in cgi-InfoNR, if available. According to an embodiment, the UE including the noSIBNESCell indicator in cgi-InfoNR may be limited to a case where the UE has a capability for nr-CGI-ReportinNES.

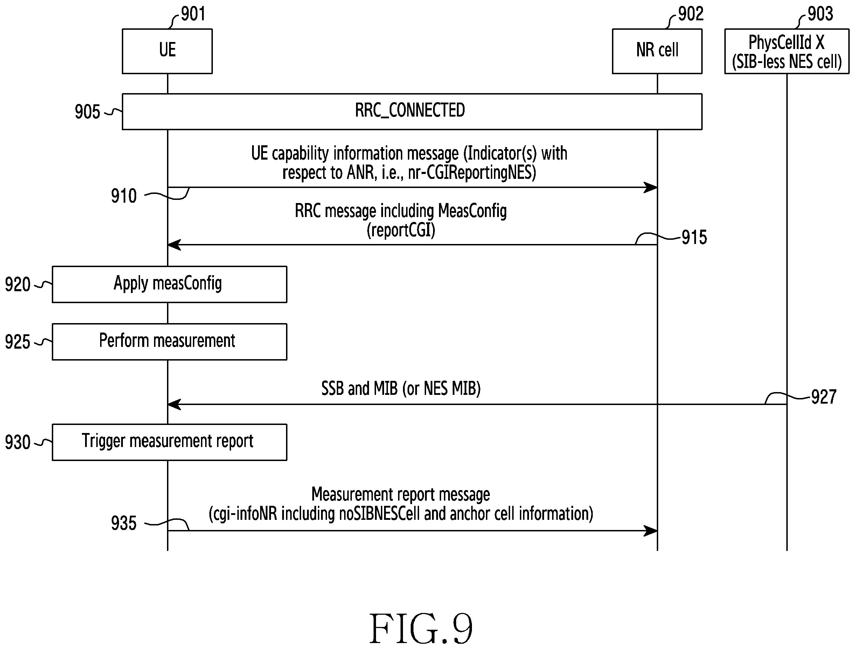

FIG. 9 illustrates a signal flow between a UE and multiple cells for supporting automatic neighbor cell relation (ANR) according to various embodiments of the disclosure. More specifically,

FIG. 9 illustrates a procedure in which, in a next generation mobile communication system, a UE in an RRC connected mode (RRC_CONNECTED) transmits a measurement report message to a base station for automatic neighbor cell relation (ANR).

According to an embodiment, the purpose of ANR is to reduce the burden on a service provider operating a base station from manually managing neighbor cell relation (NCR). For example, a base station may allow a UE to detect whether there is a neighboring cell using a specific physical cell identity. The base station may cause the UE to acquire information required by the base station from a detected cell and report the acquired information to the base station. The base station may manage NCR, based on the information provided by the UE.

According to various embodiments of the disclosure, an ANR operation in which a UE may detect an SIB-less NES cell, obtain information required by a base station for the SIB-less NES cell, and report the information to the base station is described.

Referring to FIG. 9, in step 905, a UE 901 may establish an RRC connection with a base station 902 to be in an RRC connected mode (RRC_CONNECTED).

In step 910, the UE 901 may transmit a UE capability information message (UECapabilityInformation message) to the base station 902 through a UE capability transmission procedure (UE capability transfer procedure). The UE capability information message may include a predetermined capability parameter related to whether automatic neighbor relation (ANR) is supported, as in the embodiments described above. Additionally, according to an embodiment of the disclosure, the UE may include, in the UE capability information message, an indicator (nr-CGI-ReportingNES) indicating whether the UE has a capability of identifying an MIB broadcast by a neighboring NR SIB-less NES cell (e.g., neighboring intra-frequency or inter-frequency NR SIB-less NES cell), obtaining information related to a CGI, and reporting the obtained information to the base station.

In step 915, the base station 902 may transmit an RRC message including measurement configuration information (measConfig) to the UE 901. The RRC message transmitted by the base station may refer to an RRC connection reconfiguration message (RRCReconfiguration) or an RRC connection resumption message (RRCResume). The measurement configuration information included in the RRC message transmitted by the base station may include at least one of the following.

### - measObjectToAddModList

According to an embodiment, measObjectToAddModList may include a MeasObjectToAddModList IE. The MeasObjectToAddModList IE may configure one or multiple values of MeasObjectToAddMod. Each MeasObjectToAddMod may include measObjectId and include measObject corresponding to measObjectId. The measObject may include at least one of a measurement object for NR (e.g., measObjectNR) and a measurement object for EUTRA (e.g., measObjectEUTRA).

### - reportConfigToAddModList

According to an embodiment, reportConfigToAddModList may include a ReportConfigToAddModList IE. The ReportConfigToAddModList IE may configure one or multiple values of ReportConfigToAddMod. Each ReportConfigToAddMod may include ReportConfigId and include reportConfig corresponding to ReportConfigId. The reportConfig may include at least one of a reporting configuration for NR (e.g., reportConfigNR) and a reporting configuration for InterRAT (e.g., reportConfigInterRAT). According to embodiments of the disclosure, at least one value of ReportConfigId having reportType set to reportCGI may be present in reportConfigNR. The reportCGI may include ReportCGI, and ReportCGI may configure at least one of one or multiple values of cellForWhichToReportCGI and a useAutonomousGaps indicator. Specifically, cellForWhichToReportCGI may include one or multiple values of PhysCellID (or PhysCellIdRange), and the useAutonomousGaps indicator may indicate whether the UE is able to obtain system information from an NR neighbor cell by using autonomous gaps. According to an embodiment, cellForWhichToReportCGI may be configured to include PhysCellID as PhysCellId x 903. However, this merely corresponds to an example, and a separate indicator may also be set in reportCGI together to represent ANR for an SIB-less NES cell

### - measIdToAddModList

According to an embodiment, measIdToAddModList may include a MeasIdToAddModList IE. The MeasIdToAddModList IE may configure one or multiple values of MeasIdToAddMod. Each MeasIdToAddMod may include measId and include measObjectId and reportConfigId corresponding to measId.

In step 920, the UE 901 may apply the measurement configuration information received from the base station 902. For example, if reportType is configured to be reportCGI in reportConfig associated with a particular measID (if the reportType is set to reportCGI in the reportConfig associated with this measId), the UE may operate a T321 timer by configuring different T321 timer values according to which RAT (E-UTRA or NR) the measObject associated with the measID considers, which frequency band is considered (FR1 or FR2) if NR is considered, and whether useAutonomousGaps is included in the reportConfig associated with the measID. Alternatively, the UE may operate a T321 timer by configuring different T321 timer values according to RedCap UE with 1 Rx branch or a frequency region (FR1 or FR2).

In step 925, the UE 901 may perform a measurement by applying the measurement configuration information received in step 920.

In step 930, the UE 901 may determine whether a measurement report is triggered. For example, if reportConfig having reportType set to reportCGI is included for each measId included in measIdList belonging to VarMeasConfig, when a cell having a physical cell identity matching a value of cellForWhichToReportCGI included in reportConfig belonging to the VarMeasConfig is detected on associated measObject, the UE may consider that the cell is applicable for measurement report triggering (consider the cell detected on the associated measObject which a physical cell identity matching the value of the cellForWhichToReportCGI included in the corresponding reportConfig within the VarMeasConfig to be applicable). The UE may detect a cell if at least an SSB is transmitted from the cell (927), the UE receives same, and a predetermined condition is satisfied. A detailed description may be referred to in Clauses 4.2.2.3 and 4.2.2.4 of TS 38.133. Accordingly, the UE may obtain an MIB or a new NES MIB 927 from an SIB-less NES cell 903. According to various embodiments of the disclosure, the MIB or new NES MIB may be called an MIB. In a case where reportType is set to reportCGI, if the UE obtains SIB1 for a requested cell or detects that SIB1 is not transmitted from the requested cell (e.g., if SIB1 is not transmitted in the MIB or noSIBNESCell is broadcast in the MIB), the UE may stop the T321 timer. The UE may include, for a corresponding measId, a measurement report entry in VarMeasReportList, configure numberOfReportsSent defined in VarMeasReportList to be 0, and perform a measurement reporting procedure. If the T321 timer expires for the corresponding measId, the UE may include, for the measId, a measurement report entry in VarMeasReportList, configure numberOfReportsSent defined in VarMeasReportList to be 0, and perform a measurement reporting procedure.

In step 935, the UE 901 may transmit a measurement report message (MeasurementReport message) to the base station 902. The UE may configure measResult in a measurement report message for each measId for which a measurement reporting procedure has been triggered. For example, the UE may set, to measId, a measurement identity for which a measurement report has been triggered. In a case where there is at least one possible neighboring cell for reporting (if there is at least one applicable neighboring cell to report), if a cell indicated by cellForWhichReportCGI is the NR cell 903, the UE may perform at least one of the following steps to transmit a measurement report message including cgi-InfoNR to the base station.

### - If the cell indicated by cellForWhichReportCGI is an NR cell

According to an embodiment, if the MIB indicates that SIB1 is not broadcast (else if MIB indicates the SIB1 is not broadcast), the UE may include, in cgi-InfoNR, noSIB1 including ssb-SubCarrierOffset and pdcch-ConfigSIB 1 obtained from the MIB of the corresponding cell. The UE may include, in cgi-InfoNR, a noSIBNESCell indicator included in the MIB, if available. According to an embodiment, if information on an anchor cell is obtained from the MIB broadcast by the corresponding cell, the UE may include the information in cgi-InfoNR, if available. The information on the anchor cell may include at least one of information on plmn-Identity, information on a cell identity, trackingAreaCode, gnB-ID-Length, or information included in plmn-IdentityList. According to an embodiment, the UE including the noSIBNESCell indicator and/or the information on the anchor cell in cgi-InfoNR may be limited to a case where the UE has a capability for nr-CGI-ReportinNES.

### - If the cell indicated by cellForWhichReportCGI is an NR cell

According to an embodiment, if a noSIBNESCell indicator is broadcast from the corresponding cell in the MIB, the UE may include the noSIBNESCell indicator in cgi-InfoNR, if available. According to an embodiment, if information on an anchor cell described above is obtained from the MIB broadcast by the corresponding cell, the UE may include the information in cgi-InfoNR, if available. According to an embodiment, the UE including the noSIBNESCell indicator and/or the information on the anchor cell in cgi-InfoNR may be limited to a case where the UE has a capability for nr-CGI-ReportinNES.

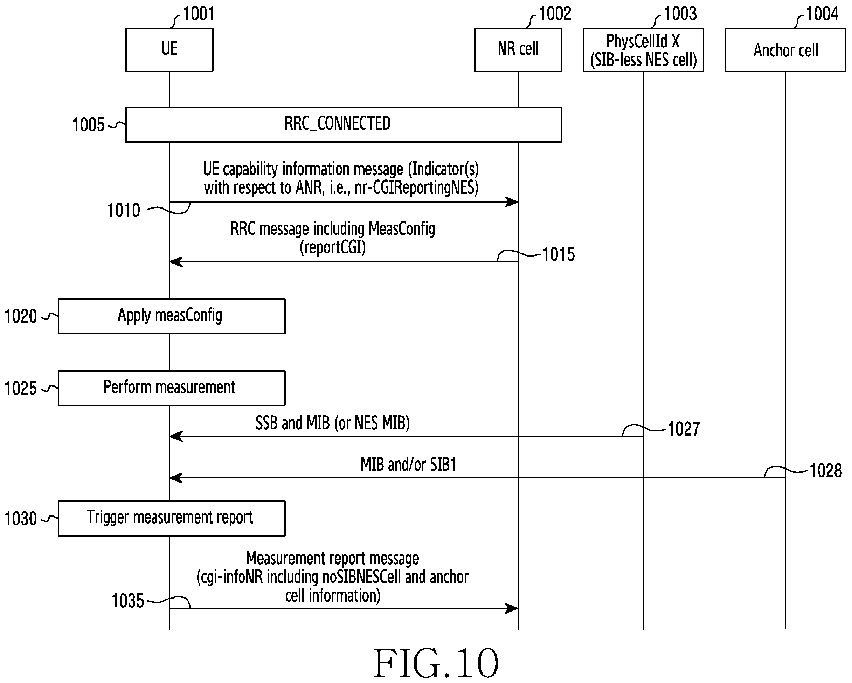

FIG. 10 illustrates another signal flow between a UE and multiple cells for supporting automatic neighbor cell relation (ANR) according to various embodiments of the disclosure. More specifically, FIG. 10 illustrates a procedure in which, in a next generation mobile communication system, a UE in an RRC connected mode (RRC_CONNECTED) transmits a measurement report message to a base station for automatic neighbor cell relation (ANR).

According to an embodiment, the purpose of ANR is to reduce the burden on a service provider operating a base station from manually managing neighbor cell relation (NCR). For example, a base station may allow a UE to detect whether there is a neighboring cell using a specific physical cell identity. The base station may cause the UE to acquire information required by the base station from a detected cell and report the acquired information to the base station. The base station may manage NCR, based on the information provided by the UE.

According to various embodiments of the disclosure, an ANR operation in which a UE may detect an SIB-less NES cell, obtain information required by a base station for the SIB-less NES cell, and report the information to the base station is described.

Referring to FIG. 10, in step 1005, a UE 1001 may establish an RRC connection with a base station 1002 to be in an RRC connected mode (RRC_CONNECTED).

In step 1010, the UE 1001 may transmit a UE capability information message (UECapabilityInformation message) to the base station 1002 through a UE capability transmission procedure (UE capability transfer procedure). The UE capability information message may include a predetermined capability parameter related to whether automatic neighbor relation (ANR) is supported, as in the embodiments described above. According to an embodiment of the disclosure, the UE may include, in the UE capability information message, an indicator (nr-CGI-ReportingNES) indicating whether the UE has a capability of identifying an MIB broadcast by a neighboring NR SIB-less NES cell (e.g., neighboring intra-frequency or inter-frequency NR SIB-less NES cell), obtaining information related to a CGI, and reporting the obtained information to the base station.

In step 1015, the base station 1002 may transmit an RRC message including measurement configuration information (measConfig) to the UE 1001. The RRC message transmitted by the base station may refer to an RRC connection reconfiguration message (RRCReconfiguration) or an RRC connection resumption message (RRCResume). The measurement configuration information included in the RRC message transmitted by the base station may include at least one of the following.

### - measObjectToAddModList

According to an embodiment, measObjectToAddModList may include a MeasObjectToAddModList information element (hereinafter, IE). The MeasObjectToAddModList IE may configure one or multiple values of MeasObjectToAddMod. Each MeasObjectToAddMod may include measObjectId and include measObject corresponding to measObjectId. The measObject may include at least one of a measurement object for NR (e.g., measObjectNR) and a measurement object for EUTRA (e.g., measObjectEUTRA).

### - reportConfigToAddModList

According to an embodiment, reportConfigToAddModList may include a ReportConfigToAddModList IE. The ReportConfigToAddModList IE may configure one or multiple values of ReportConfigToAddMod. Each ReportConfigToAddMod may include ReportConfigId and include reportConfig corresponding to ReportConfigId. The reportConfig may include at least one of a reporting configuration for NR (e.g., reportConfigNR) and a reporting configuration for InterRAT (e.g., reportConfigInterRAT). According to embodiments of the disclosure, at least one value of ReportConfigId having reportType set to reportCGI may be present in reportConfigNR. The reportCGI may include ReportCGI, and ReportCGI may configure at least one of one or multiple values of cellForWhichToReportCGI and a useAutonomousGaps indicator. Specifically, cellForWhichToReportCGI may include one or multiple values of PhysCellID (or PhysCellIdRange), and the useAutonomousGaps indicator may indicate whether the UE is able to obtain system information from an NR neighbor cell by using autonomous gaps. According to an embodiment, cellForWhichToReportCGI may be configured to include PhysCellID as PhysCellId x 1003. However, this merely corresponds to an example, and a separate indicator may also be set in reportCGI together to represent ANR for an SIB-less NES cell

### - measIdToAddModList

According to an embodiment, measIdToAddModList may include a MeasIdToAddModList IE. The MeasIdToAddModList IE may configure one or multiple values of MeasIdToAddMod. Each MeasIdToAddMod may include measId and include measObjectId and reportConfigId corresponding to measId.

In step 1020, the UE 1001 may apply the measurement configuration information received from the base station 1002. For example, if reportType is configured to be reportCGI in reportConfig associated with a particular measID (if the reportType is set to reportCGI in the reportConfig associated with this measId), the UE may operate a T321 timer by configuring different T321 timer values according to which RAT (E-UTRA or NR) the measObject associated with the measID considers, which frequency band is considered (FR1 or FR2) if NR is considered, and whether useAutonomousGaps is included in the reportConfig associated with the measID. Alternatively, the UE may operate a T321 timer by configuring different T321 timer values according to RedCap UE with 1 Rx branch or a frequency region (FR1 or FR2).

In step 1025, the UE 1001 may perform a measurement by applying the measurement configuration information received in step 1020.

In step 1030, the UE 1001 may determine whether a measurement report is triggered. For example, if reportConfig having reportType set to reportCGI is included for each measId included in measIdList belonging to VarMeasConfig, when a cell having a physical cell identity matching a value of cellForWhichToReportCGI included in reportConfig belonging to the VarMeasConfig is detected on associated measObject, the UE may consider that the cell is applicable for measurement report triggering (consider the cell detected on the associated measObject which a physical cell identity matching the value of the cellForWhichToReportCGI included in the corresponding reportConfig within the VarMeasConfig to be applicable). The UE may detect a cell if at least an SSB is transmitted from the cell (1027), the UE receives same, and a predetermined condition is satisfied. A detailed description may be referred to in Clauses 4.2.2.3 and 4.2.2.4 of TS 38.133. Accordingly, the UE may obtain an MIB or a new NES MIB 1027 from an SIB-less NES cell 1003. According to various embodiments of the disclosure, the MIB or new NES MIB may be called an MIB. In a case where reportType is set to reportCGI, if the UE obtains SIB 1 for a requested cell or detects that SIB 1 is not transmitted from the requested cell (e.g., if SIB 1 is not transmitted in the MIB or noSIBNESCell is broadcast in the MIB), the UE may stop the T321 timer. The UE may include, for a corresponding measId, a measurement report entry in VarMeasReportList, configure numberOfReportsSent defined in VarMeasReportList to be 0, and perform a measurement reporting procedure. If the T321 timer expires for the corresponding measId, the UE may include, for the measId, a measurement report entry in VarMeasReportList, configure numberOfReportsSent defined in VarMeasReportList to be 0, and perform a measurement reporting procedure. According to an embodiment, if the corresponding cell is an SIB-less NES cell, the UE may additionally obtain an MIB and/or SIB from an anchor cell 1004 for the SIB-less NES cell (step 1028).

In step 1035, the UE 1001 may transmit a measurement report message (MeasurementReport message) to the base station 1002. The UE may configure measResult in a measurement report message for each measId for which a measurement reporting procedure has been triggered. For example, the UE may set, to measId, a measurement identity for which a measurement report has been triggered. In a case where there is at least one possible neighboring cell for reporting (if there is at least one applicable neighboring cell to report), if a cell indicated by cellForWhichReportCGI is the NR cell 1003, the UE may perform at least one of the following steps to transmit a measurement report message including cgi-InfoNR to the base station.

### - If the cell indicated by cellForWhichReportCGI is an NR cell

According to an embodiment, if the MIB indicates that SIB 1 is not broadcast (else if MIB indicates the SIB1 is not broadcast), the UE may include, in cgi-InfoNR, noSIB1 including ssb-SubCarrierOffset and pdcch-ConfigSIB 1 obtained from the MIB of the corresponding cell. The UE may include, in cgi-InfoNR, a noSIBNESCell indicator included in the MIB, if available. According to an embodiment, if information on an anchor cell is obtained from the MIB broadcast by the corresponding cell, the UE may include the information in cgi-InfoNR, if available. The information on the anchor cell may include at least one of information on plmn-Identity, information on a cell identity, trackingAreaCode, gnB-ID-Length, or information included in plmn-IdentityList. According to an embodiment, the UE including the noSIBNESCell indicator and/or the information on the anchor cell in cgi-InfoNR may be limited to a case where the UE has a capability for nr-CGI-ReportinNES.

### - If the cell indicated by cellForWhichReportCGI is an NR cell

According to an embodiment, if a noSIBNESCell indicator is broadcast from the corresponding cell in the MIB, the UE may include the noSIBNESCell indicator in cgi-InfoNR, if available. According to an embodiment, if information on an anchor cell described above is obtained from the MIB broadcast by the corresponding cell, the UE may include the information in cgi-InfoNR, if available. According to an embodiment, the UE including the noSIBNESCell indicator and/or the information on the anchor cell in cgi-InfoNR may be limited to a case where the UE has a capability for nr-CGI-ReportinNES. According to an embodiment, in a case of an SIB-less NES Cell, SIB 1 not being broadcast may not be indicated through ssb-SubCarrierOffset of the MIB.
- If the UE obtains plmn-IdentityInfoList of cgi-info of the anchor cell 1004 for the NR cell indicated by cellForWhichReportCGI (if plmn-IdentityInfoList of the cgi-Info for the concerned cell has been obtained)

According to an embodiment, the UE may include, in cgi-InfoNR, plmn-IdentityInfoList including plmn-IdentityList, trackingAreaCode (if available), ranac (if available), cellIdentity, and cellReservedForOperatorUse for each entry of plmn-IdentityInfoList. The UE may include frequencyBandList in cgi-InfoNR if available. If gNB-ID-Length is being broadcast for each PLMN-IdentityInfo present in plmn-IdentityInfoList, the UE may include gNB-ID-Length in cgi-InfoNR.
- If the UE obtains npn-IdentityInfoList of cgi-info of the anchor cell 1004 for the NR cell indicated by cellForWhichReportCGI (if npn-IdentityInfoList of the cgi-Info for the concerned cell has been obtained)

According to an embodiment, the UE may include, in cgi-InfoNR, npn-IdentityInfoList including npn-IdentityList, trackingAreaCode (if available), ranac (if available), cellIdentity, and cellReservedForOperatorUse for each entry of npn-IdentityList. If gNB-ID-Length is being broadcast for each NPN-IdentityInfo included in NPN-IdentityInfoList, the UE may include gNB-ID-Length in cgi-InfoNR. The UE may include cellReservedForOtherUse in cgi-InfoNR, if available.

According to an embodiment, if SIB1 being not broadcast is indicated through the MIB broadcast by the anchor cell for the NR cell indicated by cellForWhichReportCGI (else if MIB indicates the SIB1 is not broadcast), the UE may include, in cgi-InfoNR, noSIB1 including ssb-SubCarrierOffset and pdcch-ConfigSIB 1 obtained from the MIB of the corresponding cell.

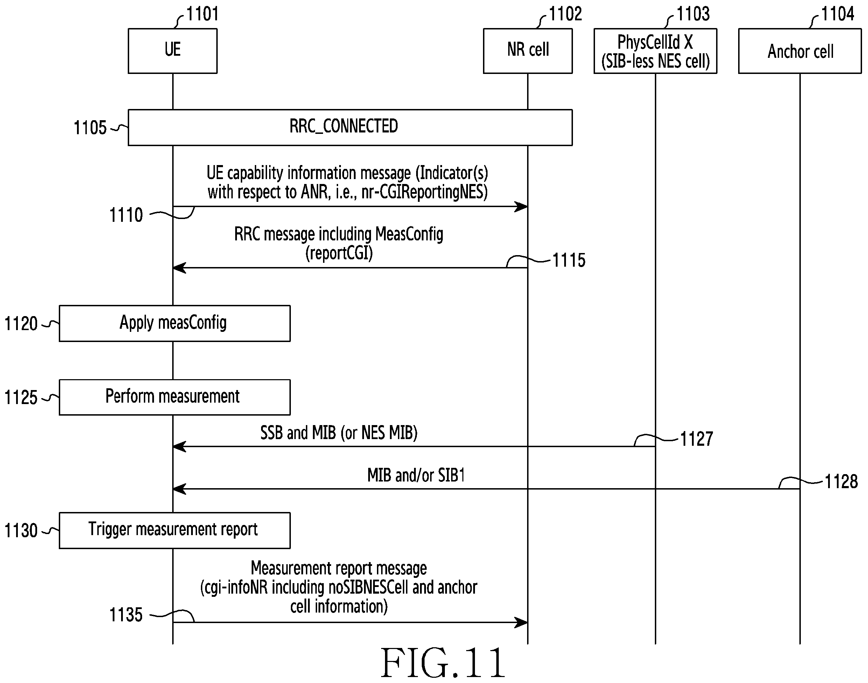

FIG. 11 illustrates another signal flow between a UE and multiple cells for supporting automatic neighbor cell relation (ANR) according to various embodiments of the disclosure. More specifically, FIG. 11 illustrates a procedure in which, in a next generation mobile communication system, a UE in an RRC connected mode (RRC_CONNECTED) transmits a measurement report message to a base station for automatic neighbor cell relation (ANR).

According to an embodiment, the purpose of ANR is to reduce the burden on a service provider operating a base station from manually managing neighbor cell relation (NCR). For example, a base station may allow a UE to detect whether there is a neighboring cell using a specific physical cell identity. The base station may cause the UE to acquire information required by the base station from a detected cell and report the acquired information to the base station. The base station may manage NCR, based on the information provided by the UE.

According to various embodiments of the disclosure, an ANR operation in which a UE may detect an SIB-less NES cell, obtain information required by a base station for the SIB-less NES cell, and report the information to the base station is described.

Referring to FIG. 11, in step 1105, a UE 1101 may establish an RRC connection with a base station 1102 to be in an RRC connected mode (RRC_CONNECTED).

In step 1110, the UE 1101 may transmit a UE capability information message (UECapabilityInformation message) to the base station 1102 through a UE capability transmission procedure (UE capability transfer procedure). The UE capability information message may include a predetermined capability parameter related to whether automatic neighbor relation (ANR) is supported, as in the embodiments described above. According to an embodiment of the disclosure, the UE may include, in the UE capability information message, an indicator (nr-CGI-ReportingNES) indicating whether the UE has a capability of identifying an MIB broadcast by a neighboring NR SIB-less NES cell (e.g., neighboring intra-frequency or inter-frequency NR SIB-less NES cell), obtaining information related to a CGI, and reporting the obtained information to the base station.

In step 1115, the base station 1102 may transmit an RRC message including measurement configuration information (measConfig) to the UE 1101. The RRC message transmitted by the base station may refer to an RRC connection reconfiguration message (RRCReconfiguration) or an RRC connection resumption message (RRCResume). The measurement configuration information included in the RRC message transmitted by the base station may include at least one of the following.

### - measObjectToAddModList

According to an embodiment, measObjectToAddModList may include a MeasObjectToAddModList IE. The MeasObjectToAddModList IE may configure one or multiple values of MeasObjectToAddMod. Each MeasObjectToAddMod may include measObjectId and include measObject corresponding to measObjectId. The measObject may include at least one of a measurement object for NR (e.g., measObjectNR) and a measurement object for EUTRA (e.g., measObjectEUTRA).

### - reportConfigToAddModList

According to an embodiment, reportConfigToAddModList may include a ReportConfigToAddModList IE. The ReportConfigToAddModList IE may configure one or multiple values of ReportConfigToAddMod. Each ReportConfigToAddMod may include ReportConfigId and include reportConfig corresponding to ReportConfigId. The reportConfig may include at least one of a reporting configuration for NR (e.g., reportConfigNR) and a reporting configuration for InterRAT (e.g., reportConfigInterRAT). According to embodiments of the disclosure, at least one value of ReportConfigId having reportType set to reportCGI may be present in reportConfigNR. The reportCGI may include ReportCGI, and ReportCGI may configure at least one of one or multiple values of cellForWhichToReportCGI and a useAutonomousGaps indicator. Specifically, cellForWhichToReportCGI may include one or multiple values of PhysCellID (or PhysCellIdRange), and the useAutonomousGaps indicator may indicate whether the UE is able to obtain system information from an NR neighbor cell by using autonomous gaps. According to an embodiment, cellForWhichToReportCGI may be configured to include PhysCellID as PhysCellId x 1103. However, this merely corresponds to an example, and a separate indicator may also be set in reportCGI together to represent ANR for an SIB-less NES cell

### - measIdToAddModList

According to an embodiment, measIdToAddModList may include a MeasIdToAddModList IE. The MeasIdToAddModList IE may configure one or multiple values of MeasIdToAddMod. Each MeasIdToAddMod may include measId and include measObjectId and reportConfigId corresponding to measId.

In step 1120, the UE 1101 may apply the measurement configuration information received from the base station 1102. For example, if reportType is configured to be reportCGI in reportConfig associated with a particular measID (if the reportType is set to reportCGI in the reportConfig associated with this measId), the UE may operate a T321 timer by configuring different T321 timer values according to which RAT (E-UTRA or NR) the measObject associated with the measID considers, which frequency band is considered (FR1 or FR2) if NR is considered, and whether useAutonomousGaps is included in the reportConfig associated with the measID. Alternatively, the UE may operate a T321 timer by configuring different T321 timer values according to RedCap UE with 1 Rx branch or a frequency region (FR1 or FR2).

In step 1125, the UE 1101 may perform a measurement by applying the measurement configuration information received in step 1120.

In step 1130, the UE 1101 may determine whether a measurement report is triggered. For example, if reportConfig having reportType set to reportCGI is included for each measId included in measIdList belonging to VarMeasConfig, when a cell having a physical cell identity matching a value of cellForWhichToReportCGI included in reportConfig belonging to the VarMeasConfig is detected on associated measObject, the UE may consider that the cell is applicable for measurement report triggering (consider the cell detected on the associated measObject which a physical cell identity matching the value of the cellForWhichToReportCGI included in the corresponding reportConfig within the VarMeasConfig to be applicable). The UE may detect a cell if at least an SSB is transmitted from the cell (1127), the UE receives same, and a predetermined condition is satisfied. A detailed description may be referred to in Clauses 4.2.2.3 and 4.2.2.4 of TS 38.133. Accordingly, the UE may obtain an MIB or a new NES MIB 1127 from an SIB-less NES cell 1103. According to various embodiments of the disclosure, the MIB or new NES MIB may be called an MIB. In a case where reportType is set to reportCGI, if the UE obtains SIB1 for a requested cell or detects that SIB1 is not transmitted from the requested cell (e.g., if SIB1 is not transmitted in the MIB or noSIBNESCell is broadcast in the MIB), the UE may stop the T321 timer. The UE may include, for a corresponding measId, a measurement report entry in VarMeasReportList, configure numberOfReportsSent defined in VarMeasReportList to be 0, and perform a measurement reporting procedure. If the T321 timer expires for the corresponding measId, the UE may include, for the measId, a measurement report entry in VarMeasReportList, configure numberOfReportsSent defined in VarMeasReportList to be 0, and perform a measurement reporting procedure. According to an embodiment, if the corresponding cell is an SIB-less NES cell, the UE may obtain information on the SIB-less NES cell from an anchor cell 1104 corresponding to the SIB-less NES cell through system information broadcast by the anchor cell (step 1128), and report the obtained information.

In step 1135, the UE 1101 may transmit a measurement report message (MeasurementReport message) to the base station 1102. The UE may configure measResult in a measurement report message for each measId for which a measurement reporting procedure has been triggered. For example, the UE may set, to measId, a measurement identity for which a measurement report has been triggered. In a case where there is at least one possible neighboring cell for reporting (if there is at least one applicable neighboring cell to report), if a cell indicated by cellForWhichReportCGI is the NR cell 1103, the UE may perform at least one of the following steps to transmit a measurement report message including cgi-InfoNR to the base station.

### - If the cell indicated by cellForWhichReportCGI is an NR cell

According to an embodiment, if the MIB indicates that SIB 1 is not broadcast (else if MIB indicates the SIB1 is not broadcast), the UE may include, in cgi-InfoNR, noSIB1 including ssb-SubCarrierOffset and pdcch-ConfigSIB 1 obtained from the MIB of the corresponding cell. The UE may include, in cgi-InfoNR, a noSIBNESCell indicator included in the MIB, if available. According to an embodiment, if information on the anchor cell is obtained from the MIB broadcast by the corresponding cell, the UE may include the information in cgi-InfoNR, if available. The information on the anchor cell may include at least one of information on plmn-Identity, information on a cell identity, trackingAreaCode, gnB-ID-Length, or information included in plmn-IdentityList. According to an embodiment, if the cell indicated by cellForWhichReportCGI is an SIB-less NES cell, the UE may obtain information on the SIB-less NES cell from system information broadcast by the anchor cell corresponding to the SIB-less NES cell, and include the obtained information in cgi-InfoNR. Specifically, the UE may include the information on the SIB-less NES cell in cgi-InfoNR as below.
- If the UE obtains plmn-IdentityInfoListnoSIB-NESCell of cgi-info for the NR cell indicated by cellForWhichReportCGI (if plmn-IdentityInfoListnoSIB-NESCell of the cgi-Info for the concerned SIB-less NES cell has been obtained)

According to an embodiment, the UE may include, in cgi-InfoNR, plmn-IdentityInfoListnoSIB-NESCell including plmn-IdentityList, trackingAreaCode (if available), ranac (if available), cellIdentity, and cellReservedForOperatorUse for each entry of plmn-IdentityInfoList. The UE may include frequencyBandList in cgi-InfoNR, if available. If gNB-ID-Length is being broadcast for each PLMN-IdentityInfo present in plmn-IdentityInfoList, the UE may include gNB-ID-Length in cgi-InfoNR.

### - If the cell indicated by cellForWhichReportCGI is an NR cell

According to an embodiment, if a noSIBNESCell indicator is broadcast from the corresponding cell in the MIB, the UE may include the noSIBNESCell indicator in cgi-InfoNR, if available. According to an embodiment, if information on an anchor cell described above is obtained from the MIB broadcast by the corresponding cell, the UE may include the information in cgi-InfoNR, if available. According to an embodiment, if the cell indicated by cellForWhichReportCGI is an SIB-less NES cell, the UE may obtain information on the SIB-less NES cell from system information broadcast by the anchor cell corresponding to the SIB-less NES cell, and include the obtained information in cgi-InfoNR. Specifically, the UE may include the information on the SIB-less NES cell in cgi-InfoNR as below.
- If the UE obtains plmn-IdentityInfoList of cgi-info for the NR cell indicated by cellForWhichReportCGI (if plmn-IdentityInfoList of the cgi-Info for the concerned SIB-less NES cell has been obtained)

According to an embodiment, the UE may include, in cgi-InfoNR, plmn-IdentityInfoList including plmn-IdentityList, trackingAreaCode (if available), ranac (if available), cellIdentity, and cellReservedForOperatorUse for each entry of plmn-IdentityInfoList. The UE may include frequencyBandList in cgi-InfoNR, if available. If gNB-ID-Length is being broadcast for each PLMN-IdentityInfo present in plmn-IdentityInfoList, the UE may include gNB-ID-Length in cgi-InfoNR.

According to an embodiment, the UE including the noSIBNESCell indicator, the information on the anchor cell, and/or the information on the SIB-less NES cell in cgi-InfoNR may be limited to a case where the UE has a capability for nr-CGI-ReportinNES.

According to an embodiment, an embodiment of the disclosure illustrated in FIG. 1-k may be performed together with the embodiments described above. If the information included in cgi-InfoNR is not distinguished from each other, it is obvious that the names of indicators or information elements for distinguishing between the information may be differently defined (e.g., plmn-IdentityInfoListnoSIB-NESCell). When reporting cgi-InfoNR to the base station, the UE may include all possible information therein. For example, the UE may also include only information that the UE possesses in cgi-InfoNR.

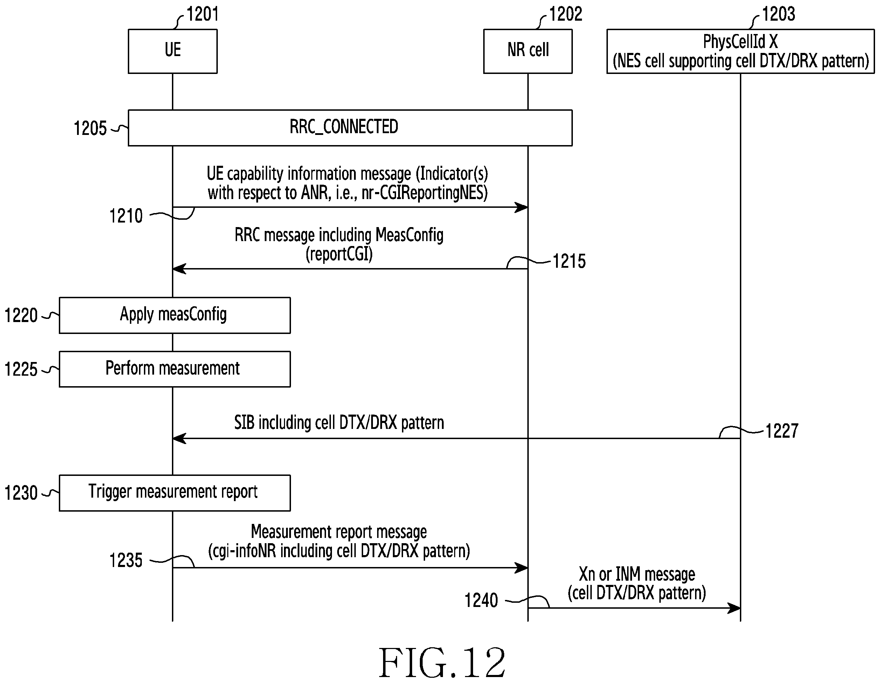

FIG. 12 illustrates another signal flow between a UE and at least one cell for supporting automatic neighbor cell relation (ANR) according to various embodiments of the disclosure. More specifically, FIG. 12 illustrates a procedure in which, in a next generation mobile communication system, a UE in an RRC connected mode (RRC_CONNECTED) transmits a measurement report message to a base station for automatic neighbor cell relation (ANR).

According to an embodiment, the purpose of ANR is to reduce the burden on a service provider operating a base station from manually managing neighbor cell relation (NCR). For example, a base station may allow a UE to detect whether there is a neighboring cell using a specific physical cell identity. The base station may cause the UE to acquire information required by the base station from a detected cell and report the acquired information to the base station. The base station may manage NCR, based on the information provided by the UE.

According to various embodiments of the disclosure, an ANR operation in which a UE obtains cell discontinuous Tx/Rx (DTX/DRX) pattern information and reports same to a base station is described. According to an embodiment, an operation in which cell DTX/DRX pattern information is exchanged between base stations is also described. According to various embodiments of the disclosure, the steps illustrated in FIG. 1-l may also be performed together with all or part of the above embodiments.

A cell DTX pattern may indicate that a cell does not transmit signals during a certain duration. For example, a particular cell may not transmit signals according to a specific pattern for network energy saving. For instance, cell DTX pattern information may include a period (periodicity) (e.g., which period is to be used for activating cell DTX), an offset start based on a slot start or a specific time or frequency, and time (duration) information indicating a duration during which a signal is or is not transmitted. The corresponding cell may broadcast a cell DTX pattern as system information. Similarly, a particular cell may activate a cell DRX pattern for network energy saving. For example, the cell DRX pattern may indicate that the cell does not receive signals during a certain duration. For instance, cell DRX pattern information may include a period (e.g., which period is to be used for activating cell DRX), an offset start based on a slot start or a specific time or frequency, and time (duration) information indicating a duration during which a signal is to be received or not to be received.

Referring to FIG. 12, in step 1205, a UE 1201 may establish an RRC connection with a base station 1202 to be in an RRC connected mode (RRC_CONNECTED).

In step 1210, the UE 1201 may transmit a UE capability information message (UECapabilityInformation message) to the base station 1202 through a UE capability transmission procedure (UE capability transfer procedure). The UE capability information message may include a predetermined capability parameter related to whether automatic neighbor relation (ANR) is supported, as in the embodiments described above. According to an embodiment of the disclosure, the UE may include, in the UE capability information message, an indicator (nr-CGI-ReportingNES) indicating whether the UE has a capability of identifying an MIB broadcast by a neighboring NR NES cell (e.g., neighboring intra-frequency or inter-frequency NR NES cell), obtaining information related to a CGI, and reporting the obtained information to the base station.

In step 1215, the base station 1202 may transmit an RRC message including measurement configuration information (measConfig) to the UE 1201. The RRC message transmitted by the base station may refer to an RRC connection reconfiguration message (RRCReconfiguration) or an RRC connection resumption message (RRCResume). The measurement configuration information included in the RRC message transmitted by the base station may include at least one of the following.

### - measObjectToAddModList

According to an embodiment, measObjectToAddModList may include a MeasObjectToAddModList IE. The MeasObjectToAddModList IE may configure one or multiple values of MeasObjectToAddMod. Each MeasObjectToAddMod may include measObjectId and include measObject corresponding to measObjectId. The measObject may include at least one of a measurement object for NR (e.g., measObjectNR) and a measurement object for EUTRA (e.g., measObjectEUTRA).

### - reportConfigToAddModList

According to an embodiment, reportConfigToAddModList may include a ReportConfigToAddModList IE. The ReportConfigToAddModList IE may configure one or multiple values of ReportConfigToAddMod. Each ReportConfigToAddMod may include ReportConfigId and include reportConfig corresponding to ReportConfigId. The reportConfig may include at least one of a reporting configuration for NR (e.g., reportConfigNR) and a reporting configuration for InterRAT (e.g., reportConfigInterRAT). According to embodiments of the disclosure, at least one value of ReportConfigId having reportType set to reportCGI may be present in reportConfigNR. The reportCGI may include ReportCGI, and ReportCGI may configure at least one of one or multiple values of cellForWhichToReportCGI and a useAutonomousGaps indicator. Specifically, cellForWhichToReportCGI may include one or multiple values of PhysCellID (or PhysCellIdRange), and the useAutonomousGaps indicator may indicate whether the UE is able to obtain system information from an NR neighbor cell by using autonomous gaps. According to an embodiment, cellForWhichToReportCGI may be configured to include PhysCellID as PhysCellId x 1203. However, this merely corresponds to an example, a separate indicator may be set in reportCGI together so that the UE additionally transmits a cell DTX/DRX pattern to the base station through ANR.

### - measIdToAddModList

According to an embodiment, measIdToAddModList may include a MeasIdToAddModList IE. The MeasIdToAddModList IE may configure one or multiple values of MeasIdToAddMod. Each MeasIdToAddMod may include measId and include measObjectId and reportConfigId corresponding to measId.

In step 1220, the UE 1201 may apply the measurement configuration information received from the base station 1202. For example, if reportType is configured to be reportCGI in reportConfig associated with a particular measID (if the reportType is set to reportCGI in the reportConfig associated with this measId), the UE may operate a T321 timer by configuring different T321 timer values according to which RAT (E-UTRA or NR) the measObject associated with the measID considers, which frequency band is considered (FR1 or FR2) if NR is considered, and whether useAutonomousGaps is included in the reportConfig associated with the measID. Alternatively, the UE may operate a T321 timer by configuring different T321 timer values according to RedCap UE with 1 Rx branch or a frequency region (FR1 or FR2).

In step 1225, the UE 1201 may perform a measurement by applying the measurement configuration information received in step 1220.

In step 1230, the UE 1201 may determine whether a measurement report is triggered. For example, if reportConfig having reportType set to reportCGI is included for each measId included in measIdList belonging to VarMeasConfig, when a cell having a physical cell identity matching a value of cellForWhichToReportCGI included in reportConfig belonging to the VarMeasConfig is detected on associated measObject, the UE may consider that the cell is applicable for measurement report triggering (consider the cell detected on the associated measObject which a physical cell identity matching the value of the cellForWhichToReportCGI included in the corresponding reportConfig within the VarMeasConfig to be applicable). The UE may detect a cell if at least an SSB is transmitted from the cell, the UE receives same, and a predetermined condition is satisfied. A detailed description may be referred to in Clauses 4.2.2.3 and 4.2.2.4 of TS 38.133. In a case where reportType is set to reportCGI, if the UE obtains SIB1 for a requested cell or detects that SIB1 is not transmitted from the requested cell, the UE may stop the T321 timer. The UE may include, for a corresponding measId, a measurement report entry in VarMeasReportList, configure numberOfReportsSent defined in VarMeasReportList to be 0, and perform a measurement reporting procedure. If the T321 timer expires for the corresponding measId, the UE may include, for the measId, a measurement report entry in VarMeasReportList, configure numberOfReportsSent defined in VarMeasReportList to be 0, and perform a measurement reporting procedure.

In step 1235, the UE 1201 may transmit a measurement report message (MeasurementReport message) to the base station 1202. The UE may configure measResult in a measurement report message for each measId for which a measurement reporting procedure has been triggered. For example, the UE may set, to measId, a measurement identity for which a measurement report has been triggered. In a case where there is at least one possible neighboring cell for reporting (if there is at least one applicable neighboring cell to report), if a cell indicated by cellForWhichReportCGI is the NR cell 1203, the UE may use at least one of the above embodiments to transmit a measurement report message including cgi-InfoNR to the base station.

According to an embodiment, if the cell indicated by cellForWhichReportCGI broadcasts a cell DTX/DRX pattern (step 1227), the UE may include same in cgi-InfoNR. However, this merely corresponds to an example, the disclosure is not limited thereto, and the operation may be performed when requested by the UE or base station supporting the operation.

In step 1240, cell DTX/DRX pattern information may be exchanged between the NR cells 1202 and 1203. For example, if in step 1235, the UE reports cell DTX/DRX pattern information to the NR cell 1202, the NR cell 1202 may transfer the information to the other NR cell 1203 through an Xn message or inter-node signaling message (INM). Alternatively, if the other NR cell 1203 uses cell DTX/DRX pattern information, the other NR cell 1203 may transfer the cell DTX/DRX pattern information to the NR cell 1202. When cell DTX/DRX pattern information is exchanged between base stations or cells, it is advantageous in that a handover to a cell where a cell DTX/DRX function is activated may not be performed. In the disclosure, the term "cell DTX/DRX" may refer to cell DTX only, cell DRX only, or both cell DTX and cell DRX.

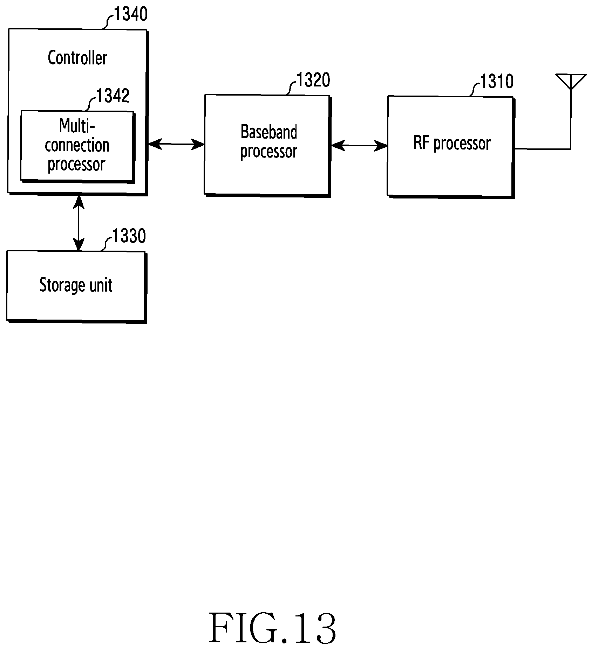

FIG. 13 illustrates a structure of a UE according to various embodiments of the disclosure.

Referring to FIG. 13, the UE may include a radio frequency (RF) processor 1310, a baseband processor 1320, a storage unit 1330, and a controller 1340.

The RF processor 1310 may perform functions for transmitting/receiving signals through a radio channel, such as signal band conversion and amplification. That is, the RF processor 1310 may up-convert a baseband signal provided from the baseband processor 1320 to an RF band signal, may transmit the same through an antenna, and may down-convert an RF band signal received through the antenna to a baseband signal. For example, the RF processor 1310 may include a transmission filter, a reception filter, an amplifier, a mixer, an oscillator, a digital-to-analog converter (DAC), an analog-to-digital converter (ADC), and the like. Referring to FIG. 13, although only one antenna is illustrated therein, the UE may include multiple antennas. In addition, the RF processor 1310 may include multiple RF chains. Furthermore, the RF processor 1310 may perform beamforming. For the beamforming, the RF processor 1310 may adjust the phase and magnitude of signals transmitted/received through multiple antennas or antenna elements, respectively. In addition, the RF processor may perform MIMO, and may receive multiple layers when performing a MIMO operation.

The baseband processor 1320 may perform functions of conversion between baseband signals and bitstrings according to the physical layer specifications of the system. For example, during data transmission, the baseband processor 1320 may encode and modulate a transmitted bitstring to generate complex symbols. In addition, during data reception, the baseband processor 1320 may demodulate and decode a baseband signal provided from the RF processor 1310 to restore a received bitstring. For example, when following the orthogonal frequency division multiplexing (OFDM) scheme, during data transmission, the baseband processor 1320 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1320 may split a baseband signal provided from the RF processor 1k-10 at the OFDM symbol level, may restore signals mapped to subcarriers through a fast Fourier transform (FFT) operation, and may restore a received bitstring through demodulation and decoding.

The baseband processor 1320 and the RF processor 1310 may transmit and receive signals as described above. Therefore, the baseband processor 1320 and the RF processor 1310 may be referred to as a transmitter, a receiver, a transceiver, or a communication unit. Furthermore, at least one of the baseband processor 1320 and the RF processor 1310 may include multiple communication modules to support multiple different radio access technologies. In addition, at least one of the baseband processor 1320 and the RF processor 1310 may include different communication modules to process signals in different frequency bands. For example, the different radio access technologies may include wireless LANs (for example, IEEE 802.11), cellular networks (for example, LTE), and the like. In addition, the different frequency bands may include super high frequency (SHF) (e.g., 2 NRHz) bands and millimeter wave (mmWave) (e.g., 60GHz) bands.

The storage unit 1330 stores data such as basic programs for operation of the UE, application programs, and configuration information. Particularly, the storage unit 1330 may store information regarding a second access node configured to perform wireless communication by using a second radio access technology. In addition, the storage unit 1330 may provide the stored data at the request of the controller 1340.

The controller 1340 controls the overall operation of the UE. For example, the controller 1340 may transmit/receive signals through the baseband processor 1320 and the RF processor 1310. In addition, the controller 1340 records data in the storage unit 1330 and reads the data from the storage unit 1330. To this end, the controller 1340 may include at least one processor. For example, the controller 1340 may include a communication processor (CP) configured to perform control for communication, and an application processor (AP) configured to control upper layers such as application programs.

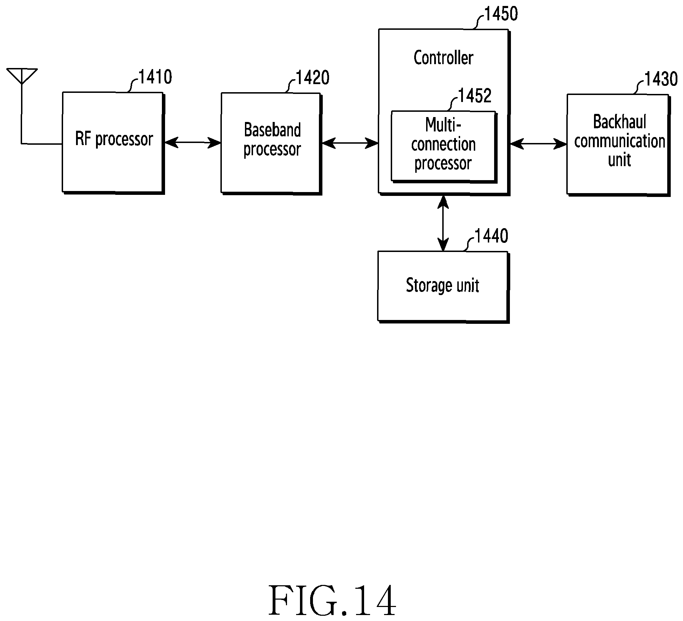

FIG. 14 illustrates a structure of a base station according to various embodiments of the disclosure.

Referring to FIG. 14, the base station may include an RF processor 1410, a baseband processor 1420, a backhaul communication unit 1430, a storage unit 1440, and a controller 1450.

The RF processor 1410 may perform functions for transmitting/receiving signals through a radio channel, such as signal band conversion and amplification. That is, the RF processor 1410 may up-convert a baseband signal provided from the baseband processor 1420 to an RF band signal, may transmit the same through an antenna, and may down-convert an RF band signal received through the antenna to a baseband signal. For example, the RF processor 1410 may include a transmission filter, a reception filter, an amplifier, a mixer, an oscillator, a DAC, and an ADC. Although only one antenna is illustrated in the drawing, the first access node may include multiple antennas. In addition, the RF processor 1410 may include multiple RF chains. Furthermore, the RF processor 1410 may perform beamforming. For the beamforming, the RF processor 1410 may adjust the phase and magnitude of signals transmitted/received through multiple antennas or antenna elements, respectively. The RF processor may transmit one or more layers to perform a downward MIMO operation.

The baseband processor 1420 may perform functions of conversion between baseband signals and bitstrings according to the physical layer specifications of a first radio access technology. For example, during data transmission, the baseband processor 1420 may encode and modulate a transmitted bitstring to generate complex symbols. In addition, during data reception, the baseband processor 1420 may demodulate and decode a baseband signal provided from the RF processor 1410 to restore a received bitstring. For example, when following the OFDM scheme, during data transmission, the baseband processor 1420 may encode and modulate a transmitted bitstring to generate complex symbols, may map the complex symbols to subcarriers, and may configure OFDM symbols through IFFT operation and CP insertion. In addition, during data reception, the baseband processor 1420 may split a baseband signal provided from the RF processor 1410 at the OFDM symbol level, may restore signals mapped to subcarriers through FFT operation, and may restore a received bitstring through demodulation and decoding. The baseband processor 1420 and the RF processor 1410 may transmit and receive signals as described above. Therefore, the baseband processor 1420 and the RF processor 1410 may be referred to as a transmitter, a receiver, a transceiver, or a communication unit.

The backhaul communication unit 1430 provides an interface for communicating with other nodes in the network. That is, the backhaul communication unit 1430 converts bitstrings transmitted from the main base station to other nodes, for example, an auxiliary base station, a core network, etc., into physical signals, and converts physical signals received from the other nodes into bitstrings.

The storage unit 1440 may store basic programs, application programs, and data, such as configuration information, for operation of the main base station. Particularly, the storage unit 1440 may store information regarding a bearer allocated to a connected UE, a measurement result reported from the connected UE, and the like. In addition, the storage unit 1440 may store information serving as a reference to determine whether to provide multi-connection to a UE or to suspend the same. In addition, the storage unit 1440 may provide the stored data at the request of the controller 1450.

The controller 1450 controls the overall operation of the main base station. For example, the controller 1450 transmits/receives signals through the baseband processor 1420 and the RF processor 1410 or through the backhaul communication unit 1430. In addition, the controller 1450 records data in the storage unit 1440 and reads the data from the storage unit 1440. To this end, the controller 1450 may include at least one processor.

It should be noted that the above-described configuration diagrams, illustrative diagrams of control/data signal transmission methods, illustrative diagrams of operation procedures, and structural diagrams are not intended to limit the scope of the disclosure. That is, all constituent units, elements, or entities described in the embodiments of the disclosure should not be construed as being essential for the implementation of the disclosure, and the disclosure may be implemented without impairing the essential features of the disclosure by including only some constituent elements. Also, the above respective embodiments may be employed in combination, as necessary. For example, parts of the structures proposed in the disclosure may be deployed or configured in combination.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. As an example, the methods proposed in the disclosure may be partially combined with each other to operate a base station and a terminal. Moreover, although the above embodiments have been described based on the 5G or NR system, other variants based on the technical idea of the embodiments may also be implemented in other communication systems such as LTE, LTE-A, or LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A user equipment (UE) in a wireless communication system, the UE comprising:
a transceiver; and
a controller coupled with the transceiver,
wherein the controller is configured to:
transmit, to a first base station, capability information indicating whether the UE supports automatic neighbor cell relation (ANR) for a network energy saving (NES) cell that does not transmit a system information block (SIB);
receive, from the first base station, measurement configuration information including an identifier for a second base station;
receive, from the second base station, a synchronization signal (SS)/physical broadcast channel (PBCH) block (SSB) including a master information block (MIB);
perform a measurement, based on the SSB; and
report, to the first base station, a measurement result based on the measurement and the MIB, and
wherein the MIB and the measurement result includes an indicator indicating that the second base station is related to the NES cell that does not transmit the SIB.

2. The UE of claim 1, wherein the MIB further includes information on an anchor base station associated with the second base station, and
wherein the measurement result further includes the information on the anchor base station.

3. The UE of claim 2, wherein the controller is further configured to receive system information of the anchor base station or system information of the second base station through the anchor base station associated with the second base station, and
wherein the system information of the anchor base station or the system information of the second base station includes the information on the anchor base station.

4. The UE of claim 1, wherein the controller is further configured to:
receive, from the second base station, cell discontinuous transmission (DTX)/discontinuous transmission reception (DRX) pattern information associated with the second base station; and
transmit, to the first base station, the cell DTX/DRX pattern information associated with the second base station.

5. A first base station in a wireless communication system, the first base station comprising:
a transceiver; and
a controller coupled with the transceiver,
wherein the controller is configured to:
receive, from a user equipment (UE), capability information indicating whether the UE supports automatic neighbor cell relation (ANR) for a network energy saving (NES) cell that does not transmit a system information block (SIB);
transmit, to the UE, measurement configuration information including an identifier for a second base station; and
receive, from the UE, a measurement result of a measurement based on a master information block (MIB) and a synchronization signal (SS)/physical broadcast channel (PBCH) block (SSB) including the MIB, the MIB and the SSB being transmitted by the second base station, and
wherein the MIB and the measurement result include an indicator indicating that the second base station is related to the NES cell that does not transmit the SIB.

6. The first base station of claim 5, wherein the MIB further includes information on an anchor base station associated with the second base station, and
wherein the measurement result further includes the information on the anchor base station.

7. The first base station of claim 6, wherein the information on the anchor base station is included in system information of the anchor base station or system information of the second base station, which is transmitted through the anchor base station associated with the second base station.

8. The first base station of claim 5, wherein the controller is further configured to receive, from the UE, cell discontinuous transmission (DTX)/discontinuous transmission reception (DRX) pattern information associated with the second base station.

9. A method performed by a user equipment (UE) in a wireless communication system, the method comprising:
transmitting, to a first base station, capability information indicating whether the UE supports automatic neighbor cell relation (ANR) for a network energy saving (NES) cell that does not transmit a system information block (SIB);
receiving, from the first base station, measurement configuration information including an identifier for a second base station;
receiving, from the second base station, a synchronization signal (SS)/physical broadcast channel (PBCH) block (SSB) including a master information block (MIB);
performing a measurement, based on the SSB; and
reporting, to the first base station, a measurement result based on the measurement and the MIB,
wherein the MIB and the measurement result include an indicator indicating that the second base station is related to the NES cell that does not transmit the SIB.

10. The method of claim 9, wherein the MIB further includes information on an anchor base station associated with the second base station, and
wherein the measurement result further includes the information on the anchor base station.

11. The method of claim 10, further comprising receiving system information of the anchor base station or system information of the second base station through the anchor base station associated with the second base station,
wherein the system information of the anchor base station or the system information of the second base station includes the information on the anchor base station.

12. The method of claim 9, further comprising:
receiving, from the second base station cell discontinuous transmission (DTX)/discontinuous transmission reception (DRX) pattern information associated with the second base station; and
transmitting, to the first base station the cell DTX/DRX pattern information associated with the second base station.

13. A method performed by a first base station in a wireless communication system, the method comprising:
receiving, from a user equipment (UE), capability information indicating whether the UE supports automatic neighbor cell relation (ANR) for a network energy saving (NES) cell that does not transmit a system information block (SIB);
transmitting, to the UE, measurement configuration information including an identifier for a second base station; and
receiving, from the UE, a measurement result of a measurement based on a master information block (MIB) and a synchronization signal (SS)/physical broadcast channel (PBCH) block (SSB) including the MIB, the MIB and the SSB being transmitted by the second base station,
wherein the MIB and the measurement result include an indicator indicating that the second base station is related to the NES cell that does not transmit an SIB.

14. The method of claim 13, wherein the MIB further includes information on an anchor base station associated with the second base station, and
wherein the measurement result further includes the information on the anchor base station.

15. The method of claim 14, wherein the information on the anchor base station is included in system information of the anchor base station or system information of the second base station, which is transmitted through the anchor base station associated with the second base station.
